# EUROPEAN PATENT SPECIFICATION

(11) **EP 4 068 475 B1**
(45) Date of publication and mention of the grant of the patent: **04.10.2023**
(21) Application number: 21213617.0
(22) Date of filing: 10.12.2021
(51) Int. Cl.: H01M 50/105, B29C 51/08, H01M 10/04, H01M 50/178, B29C 51/00, B29L 31/00

(54) **POUCH-TYPE BATTERY CASE, APPARATUS FOR FORMING SAME, AND POUCH-TYPE SECONDARY BATTERY**
BEUTELBATTERIEGEHÄUSE, VORRICHTUNG ZU DEREN HERSTELLUNG UND BEUTELSEKUNDÄRBATTERIE
BOITIER DE BATTERIE DE TYPE POCHE, APPAREIL POUR SA FABRICATION ET BATTERIE SECONDAIRE DE TYPE POCHE

(30) Priority: 30.03.2021 KR 20210041418
(43) Date of publication of application: 05.10.2022
(73) Proprietor: LG Energy Solution, Ltd., Seoul 07335 (KR)
(72) Inventor: OH, Se Young, 34122 Daejeon (KR); HA, Jeong Min, 34122 Daejeon (KR); Kim, Sang Hun, 34122 Daejeon (KR); KIM, Sin Woong, 34122 Daejeon (KR); KIM, Geun Hee, 34122 Daejeon (KR); KIM, Hyun Beom, 34122 Daejeon (KR); KWON, Hyung Ho, 34122 Daejeon (KR)
(74) Representative: Goddar, Heinz J.

(56) References cited:
- KR-A- 20170 091 938
- US-A1- 2019 051 868
- US-A1- 2020 280 044

## Description

### BACKGROUND OF THE INVENTION

### FIELD OF THE INVENTION

The present application relates to a pouch-type battery case, an apparatus for forming same, and a pouch-type secondary battery and, more specifically, to a pouch-type battery case capable of preventing the occurrence of interference between a die edge and an electrode tab, an apparatus for forming same, and a pouch-type secondary battery. Also, the present application relates to: a pouch-type battery case capable of preventing the occurrence of wrinkling in a corner portion of the pouch-type battery case, and eliminating a whitening phenomenon and reducing a risk of insulation breakdown in a side folding portion; an apparatus for forming same; and a pouch-type secondary battery.

### DESCRIPTION OF THE RELATED ART

In general, there are several types of secondary batteries such as nickel cadmium batteries, nickel hydrogen batteries, lithium ion batteries, and lithium ion polymer batteries. These secondary batteries have been applied to and used for not only small products such as digital cameras, P-DVDs, MP₃Ps, cellular phones, PDAs, portable game devices, power tools, and E-bikes, but also large products requiring high power such as electric vehicles and hybrid vehicles, and power storage devices or backup-power storage devices for storing surplus generated power and new renewable energy.

In order to manufacture the secondary batteries, first of all, electrode active material slurry is applied to a positive electrode collector and a negative electrode collector to manufacture a positive electrode and a negative electrode, and the positive electrode and the negative electrode are stacked on both sides of a separator to form an electrode assembly having a predetermined shape. Subsequently, the electrode assembly is accommodated in a battery case, and the battery case is sealed after an electrolyte is injected therein.

The secondary batteries are classified into a pouch type, a can type, or the like according to a material of a case that accommodates the electrode assembly. In the pouch type, the electrode assembly is accommodated in a pouch made of a flexible polymer material. Also, in the can type, the electrode assembly is accommodated in a case made of a metal, a plastic material, or the like.

The pouch, which is a case of the pouch-type secondary battery, is manufactured by forming a cup portion through press processing on a flexible pouch film. Then, after the cup portion has been formed, the electrode assembly is accommodated in an accommodation space of the cup portion, and sides thereof are sealed. Through this, the secondary battery is manufactured.

The drawing forming, which is one of the press processing, is performed in a manner in which: a pouch film is inserted into a forming apparatus such as a press machine; and the pouch film is pressed and drawn by a punch. The pouch film is made of a plurality of layers, and a moisture barrier layer positioned as an inner layer is formed of metal. When the formability of the moisture barrier layer is enhanced, an outer wall of the cup portion becomes almost vertical, and curvature radii of edges of the cup portion are improved. However, in this case, a die edge among the edges presses electrode tabs, causing the interference between the die edge and the electrode tabs.

Also, the curvature radius of the die edge has been determined irrespective of the curvature radius of a bridge portion, and thus, there has been the occurrence of wrinkling in a corner portion of the pouch-type battery case. Moreover, there have been a whitening phenomenon and a risk of insulation breakdown in a side folding portion.

### [Prior Art Document]

### [Patent Document]

(Patent Document 1) Korean Patent Publication No. 2017-0124882. KR 2017 0091938 A, US 2020/280044 A1 and US 2019/051868 A1 relate to pouch cases for secondary batteries and related manufacturing methods and apparatuses.

### SUMMARY OF THE INVENTION

The present invention is set out in the appended claims. Embodiments and examples not falling within the scope of the appended claims represent examples of the disclosure not according to the invention.

Disclosed herein are a pouch-type battery case capable of preventing the occurrence of interference between an die edge and an electrode tab; an apparatus for forming same; and a pouch-type secondary battery.

Further disclosed are a pouch-type battery case capable of preventing the occurrence of wrinkling in a corner portion of the pouch-type battery case, and eliminating a whitening phenomenon and reducing a risk of insulation breakdown in a side folding portion; an apparatus for forming same; and a pouch-type secondary battery.

There is provided a pouch-type battery case which includes a cup portion and die edges (a plurality of die edges). The cup portion is configured to accommodate therein an electrode assembly. The electrode assembly may be formed by stacking an electrode and a separator. The die edges are configured to connect an outer wall of the cup portion to a side portion extending from the outer wall. The plurality of die edges include a first region and a second region. The first region and the second region are adjacent to each other. The first and second region do not overlap one another. The first region is rounded (has a rounded shape) with a first curvature radius (r1). An electrode tab extending from the electrode assembly is arranged (received, positioned, or may rest) at, in or on the first region. The second region is rounded (has a rounded shape) with multiple second curvature radii (r2, r3, r4). The second curvature radii (r2, r3, r4) are smaller than the first curvature radius (r1). The second region is divided into an inner region and an outer region by the first region. The curvature radius (r2) of the inner region is different from the curvature radii (r3, r4) of the outer region.

Herein, the expression that a structure is "rounded with a curvature radius" may be used interchangeably with that said structure has a rounded shape with said curvature radius. Said structure may refer to any of curved regions disclosed herein, including the first region, the second region, an inner region, an outer region, a main outer region, a connection outer region, a first press region, a second press region, a die inner region, a die outer region, a main die outer region, and a connection die outer region. Unless indicated otherwise, each of aforementioned curved structures may have a generally elongated shape along an edge between a respective sidewall (outer wall) and a corresponding side portion, and may have a curved surface extending and connecting between the respective sidewall (outer wall) and the corresponding side portion. For example, the respective sidewall (outer wall) and the corresponding side portion may be inclined from each other by an inclination angle (which may be, for example, 30° to 150°, 45° to 135°, 60° to 120°, or 80° to 100°) and the curved structure may smoothly (i.e., in a differentiable manner in a cross-sectional view) connect therebetween. The curvature radius may be determined according to the understanding of the undergraduate mathematics, for example in a cross-sectional plane perpendicular to the aforementioned elongation direction of the respective curved region. This may apply to a pouch film as well as to a die disclosed herein.

The cup portion may include a first cup portion and a second cup portion which are configured to accommodate the electrode assembly through folding, a bridge may be formed between the first cup portion and the second cup portion to connect the first cup portion to the second cup portion, and the first region may be formed in each of a first die edge and a second die edge which are two die edges facing each other in a direction parallel to a direction in which the bridge extends.

With respect to the first region, the inner region may be closer to the bridge than is the outer region.

The curvature radii (r3, r4) in the outer region may be greater than the curvature radius (r2) in the inner region.

A curvature radius (b1) in the bridge may be equal to the curvature radius (r2) in the inner region.

Each of the curvature radius (b1) in the bridge and the curvature radius (r2) in the inner region may be about 0.3 mm to about 0.7 mm.

Each of the curvature radius (b1) in the bridge and the curvature radius (r2) in the inner region may be about 0.45 mm to about 0.55 mm.

The outer region may include a main outer region which is a region on a third die edge facing the bridge and a connection outer region which connects the main outer region to the first region, and the curvature radius (r3) in the main outer region may be equal to the curvature radius (r4) in the connection outer region.

Each of the curvature radius (r3) in the main outer region and the curvature radius (r4) in the connection outer region may be about 1 mm or more, and the curvature radius (ri) in the first region may be about 1.5 mm to about 2.5 mm.

According to another aspect, there is provided a battery case forming apparatus for manufacturing the pouch-type battery, the battery case forming apparatus including: a die which has a top surface, on which a pouch film is placed, and includes at least one forming space recessed inward from the top surface; and a punch which is disposed above the forming space, and descends to insert the pouch film into the forming space, thereby forming the pouch film, wherein the die includes a plurality of pressing edges configured to connect the forming space to the top surface, wherein the plurality of pressing edges include: a third region which is rounded at a third curvature radius and forms the first region; and a fourth region which is other than the third region and rounded at more fourth curvature radii less than the third curvature radius , wherein the fourth region is divided into a die inner region and a die outer region with respect to the third region, and the curvature radius in the die inner region is different from the curvature radii in the die outer region.

The forming space may include a first forming space and a second forming space to form the cup portion, a die bridge may be formed between the first forming space and the second forming space to connect the first forming space to the second forming space, and the third region may be formed in each of a first pressing edge and a second pressing edge which are two pressing edges facing each other in a direction parallel to a direction in which the die bridge extends.

With respect to the third region, the die inner region may be closer to the die bridge than is the die outer region.

The curvature radii in the die outer region may be greater than the curvature radius in the die inner region.

A curvature radius in the die bridge may be equal to the curvature radius in the die inner region.

Each of the curvature radius in the die bridge and the curvature radius in the die inner region may be about 0.3 mm to about 0.7 mm.

Each of the curvature radius in the die bridge and the curvature radius in the die inner region may be about 0.45 mm to about 0.55 mm.

The die outer region may include a main die outer region which is a region on a third pressing edge facing the die bridge and a connection die outer region which connects the main die outer region to the third region, and the curvature radius in the main die outer region may be equal to the curvature radius in the connection die outer region.

Each of the curvature radius in the main die outer region and the curvature radius in the connection die outer region may be about 1 mm or more, and the curvature radius in the third region may be about 1.5 mm to about 2.5 mm.

According to another aspect, there is provided a pouch-type secondary battery including: an electrode assembly formed by stacking an electrode and a separator; and a battery case including a cup portion configured to accommodate therein the electrode assembly, wherein the battery case includes a plurality of die edges configured to connect an outer wall of the cup portion to a side portion extending from the outer wall, wherein the plurality of die edges include: a first region which is rounded at a first curvature radius (ri) and at which an electrode tab extending from the electrode is positioned; and a second region which is other than the first region and rounded at more second curvature radii (r2, r3, r4) less than the first curvature radius (r1) , wherein the second region is divided into an inner region and an outer region with respect to the first region, and the curvature radius (r2) in the inner region is different from the curvature radii (r3, r4) in the outer region.

Other specific features of the present invention are included in the detailed description and drawings.

A pouch-type battery case not according to the invention may include: a cup portion configured to accommodate therein an electrode assembly formed by stacking an electrode and a separator; and a plurality of die edges configured to connect an outer wall of the cup portion to a side portion extending from the outer wall, wherein the at least one die edge includes: a first region rounded at a first curvature radius ; and a second region rounded at a second curvature radius less than the first curvature radius.

Further, the first curvature radius may be about 1.7 mm to about 2.7 mm.

Further, the second curvature radius may be about 1.2 mm or less.

Further, the second curvature radius may be about 0.7 mm or less.

Further, the pouch-type battery case may be manufactured by forming a pouch film. The pouch film may include: a sealant layer made of a first polymer and formed as an innermost layer; a surface protection layer made of a second polymer and formed as an outermost layer; and a gas barrier layer which is made of metal including an alloy no. AA80XX series aluminum alloy and stacked between the surface protection layer and the sealant layer, wherein the thickness of the gas barrier layer is about 50 µm to about 80 µm, and the thickness of the sealant layer is about 60 µm to about 100 µm.

Further, the cup portion may have a depth having a specific value or more.

Further, the specific depth may be about 7 mm when one cup portion is formed and may be about 6.5 mm when two cup portions are formed.

Further, the cup portion may have a depth having a specific value or less.

Further, the first region may be formed in each of the facing two die edges.

Further, the plurality of first regions may be formed in one die edge.

Further, the second region may be formed between the plurality of first regions.

According to another aspect of the disclosure, there is provided a pouch-type secondary battery including: an electrode assembly formed by stacking an electrode and a separator; and a battery case including a cup portion configured to accommodate therein the electrode assembly, wherein the battery case includes a plurality of die edges configured to connect an outer wall of the cup portion to a side portion extending from the outer wall, wherein the at least one die edge includes: a first region rounded at a first curvature radius; and a second region rounded at a second curvature radius less than the first curvature radius .

Further, an electrode tab protruding from one side portion of the electrode assembly may be placed on the first region.

According to another aspect of the disclosure, there is provided a battery case forming apparatus including: a die which has a top surface, on which a pouch film is placed, and includes at least one forming space recessed inward from the top surface; and a punch which is disposed above the forming space, and descends to insert the pouch film into the forming space, thereby forming the pouch film, wherein the die includes a plurality of pressing edges configured to connect the forming space to the top surface, wherein the at least one pressing edge includes: a third region rounded at a third curvature radius ; and a fourth region rounded at a fourth curvature radius less than the third curvature radius .

Further, the third curvature radius may be about 1.5 mm to about 2.5 mm.

Further, the fourth curvature radius may be about 1 mm or less.

Unless structurally inappropriate, the features of different examples and aspects as disclosed herein may also be combined even if such combinations are not explicitly mentioned.

### TECHNICAL EFFECTS

The present invention may achieve diverse technical effects, which may for example include the following.

A first region at a die edge in which the electrode tab is seated may be formed so as to be rounded with a relatively large first curvature radius, while a second region in which no electrode tab is seated may be formed so as to be rounded with a relatively small curvature radius. As a result, an outer wall of a cup portion may be nearly perpendicular, and an interaction between the die edge and the electrode tab may be prevented, even if the curvature radius of the die edge of the cup portion decreases.

In addition, to prevent the occurrence of wrinkles in the corner of the pouch-type battery case, it is possible to eliminate the whitening phenomenon in the id folding part and reduce the risk of insulation breakage.

The effect according to the present invention is not limited by the contents exemplified above and more various effects are included in this specification.

### BRIEF DESCRIPTION OF THE DRAWINGS

The above and other aspects, features and other advantages of the present invention will be more clearly understood from the following detailed description taken in conjunction with the accompanying drawings, in which:
- FIG. 1: is an assembly view of a secondary battery according to an example;
- FIG. 2: is a cross-sectional view of a pouch film according to an example;
- FIG. 3: is a graph showing the iron and silicon contents in each of an alloy no. AA8079 aluminum alloy and an alloy no. AA8021 aluminum alloy;
- FIG. 4: is a graph showing changes in a tensile strength Rm, an elongation rate, and a grain size according to the iron content in each of the alloy no. AA8079 aluminum alloy and the alloy no. AA8021 aluminum alloy;
- FIG. 5: is an enlarged SEM image of grains of each of the alloy no. AA8079 aluminum alloy and the alloy no. AA8021 aluminum alloy;
- FIG. 6: is an enlarged schematic view of a die edge and an electrode tab according to a comparative example;
- FIG. 7: is a partial plan view of a battery case according to an example;
- FIG. 8: is a partial plan view showing a state in which an electrode assembly is inserted into a cup portion of a battery case according to an example;
- FIG. 9: is an enlarged schematic view of a first region of a die edge and an electrode tab according to an example;
- FIG. 10: is an enlarged schematic view of a second region of a die edge of a cup portion and an electrode tab according to an example;
- FIG. 11: is a schematic view of a forming apparatus according to an example;
- FIG. 12: is an enlarged view of a portion of a die according to an example;
- FIG. 13: is a perspective view of a battery case according to another example; and
- FIG. 14: is a perspective view of a forming apparatus for manufacturing a battery case according to another example.

### DETAILED DESCRIPTION OF THE PREFERRED EMBODIMENT

Advantages and features of the present invention, and implementation methods thereof will be clarified through following embodiments described in detail with reference to the accompanying drawings. The present invention may, however, be embodied in various different forms and should not be construed as limited to the embodiments set forth herein. Rather, these embodiments are provided so that this disclosure will be thorough and complete, and will fully convey the scope of the present invention to those skilled in the art. Further, the present invention is defined only by scopes of claims. Like reference numerals refer to like elements throughout.

Unless otherwise defined, all terms (including technical and scientific terms) used herein have the same meaning as commonly understood by one of ordinary skill in the art to which the present invention belongs. Also, terms as defined in a generally used dictionary are not construed ideally or excessively unless defined apparently and specifically.

The terms used in this specification are used only to explain embodiments while not limiting the present invention. In this specification, the singular forms include the plural forms as well, unless the context clearly indicates otherwise. The meaning of "comprises" and/or "comprising" used in the specification does not exclude the presence or addition of one or more components other than the mentioned component.

Hereinafter, diverse features of the present invention will be described in detail with reference to the accompanying drawings.

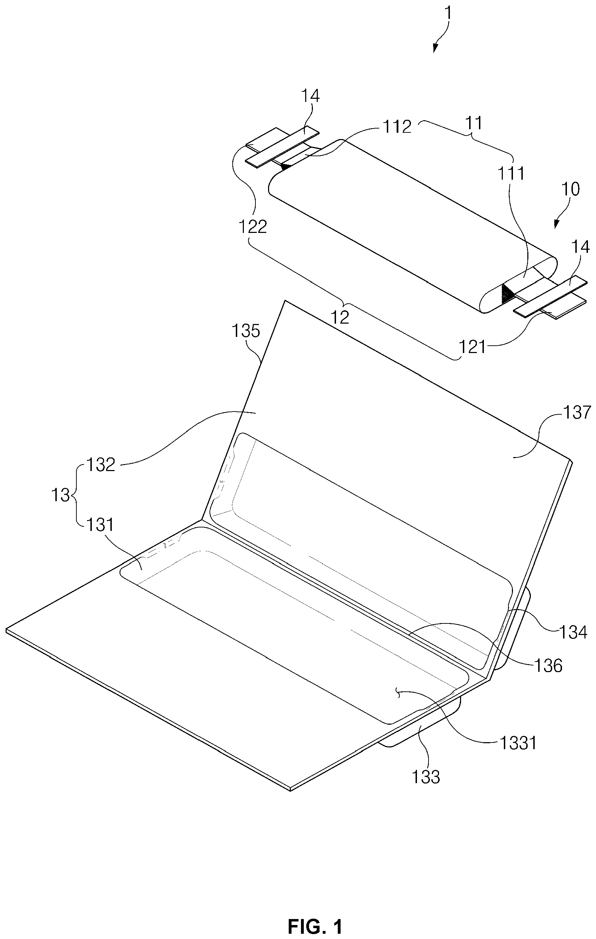

FIG. 1 is an assembly view of a secondary battery 1 according to an example.

As the tensile strength and elongation rate of a pouch film 135 are improved to increase toughness, the formability may be enhanced when a pouch-type battery case 13 is manufactured by forming the pouch film 135.

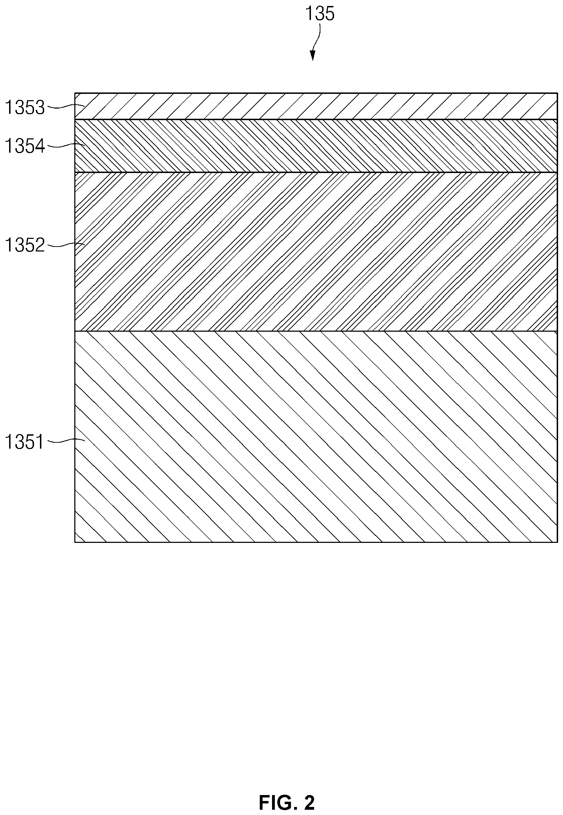

For example, the pouch film 135 may include a sealant layer 1351 (illustrated in FIG. 2). The sealant layer 1351 may be made of a first polymer and formed as an innermost layer. The pouch film 135 may comprise a surface protection layer 1353 (illustrated in FIG. 2). The surface protection layer 1353 may be made of a second polymer and formed as an outermost layer. The pouch film 135 may comprise a moisture barrier layer 1352 (illustrated in FIG. 2). The moisture barrier layer 1352 may be made of metal, which for example may include an alloy no. AA80XX series aluminum alloy. The moisture barrier layer 1352 may be stacked between the surface protection layer 1353 and the sealant layer 1351. The pouch film 135 depicted in FIG. 2 is a specific example comprising the sealant layer 1351, the moisture barrier layer 1352 and the surface protection layer 1353 as described above, and a drawing assistance layer 1354 as described below. In other examples that are not explicitly depicted in the drawings, any one or two of the layers 1351-1354 may be omitted in the pouch film 135. Additionally or alternatively, the order of the layers 1351-1354 may be different from the example shown in FIG. 2.

The thickness of the moisture barrier layer 1352 may be about 50 µm to about 80 µm, or 60 µm to 70 µm. The thickness of the sealant layer 1351 may be about 60 µm to about 100 µm, or 70 µm to 90 µm. It may be advantageous that the thickness of the moisture barrier layer 1352 is about 55 µm to about 65 µm. It may advantageous that the thickness of the sealant layer 1351 is about 75 µm to about 85 µm.

An electrode assembly 10 may be formed by alternately stacking electrodes and separators. The electrode assembly 10 may be manufactures as follows. First, a slurry may be prepared, in which an electrode active material, a binder, and a plasticizer may be mixed. Next, the slurry may be applied to a positive electrode collector and a negative electrode collector to manufacture electrodes, that are a positive electrode and a negative electrode. Separators may be stacked between the electrodes to form the electrode assembly 10. In some examples, multiple stacks of electrodes and separators may be layered upon each one another to form the electrode assembly 10. Then the electrode assembly 10 may be inserted into the battery case 13. Subsequently, an electrolyte may be injected in the battery case 13. Then the battery case 10 may be sealed.

Particularly, the electrode assembly 10 may include two types of electrodes, namely a positive electrode and a negative electrode. The electrode assembly may further comprise a separator interposed between the electrodes to insulate between the electrodes. The electrode assembly 10 may be provided in any known geometric type, such as a stacking type, a jelly roll type, or a stacking and folding type. Each of these two types of electrodes, that is, the positive electrode and the negative electrode, may have a structure in which active material slurry is applied to an electrode collector having a metal foil or a metal mesh. The metal foil or metal mesh may include aluminum and/or copper. Generally, the slurry may be formed by mixing at least granular active materials, auxiliary conductors, binders, and/or plasticizers, to which a solvent may be added. The solvent may be removed during a subsequent process.

The electrode assembly 10 may include an electrode tab 11 as illustrated in FIG. 1. The electrode tab 11 may be connected to each of the positive electrode and the negative electrode of the electrode assembly 10. The electrode tab 11 may protrude outward from the electrode assembly 10, thereby providing a passageway for electrons to move into and out of the electrode assembly 10.

Any of the electrode collectors of the electrode assembly 10 may have a portion coated with the electrode active material. The electrode collectors may each have an end portion, that is, a non-coating portion which is not coated with the electrode active material. The electrode tab 11 may be formed by cutting the non-coating portion or formed by connecting a separate conductive member to the non-coating portion through ultrasonic welding or the like. In the example of FIG. 1, the electrode tabs 11 protrude in different directions of the electrode assembly 10. This is an example for the purpose of illustration only. More generally, the electrode tabs 11 may protrude in any directions from the electrode assembly 10. Also, the electrode tabs 10 may protrude from a same side of the electrode assembly 10 in a same direction.

An electrode lead 12 may supply electricity to the outside of the secondary battery 1. The electrode lead 12 may be connected to the electrode tab 11 of the electrode assembly 10 through spot welding or the like. A portion of the electrode lead 12 may be surrounded by an insulating part 14. The insulating part 14 may be arranged so to be located within a side portion 134, which may also be referred to herein as an end face 134 or side 134. A first case 131 and a second case 132 of the battery case 13 may be thermally fused at the side portion 134 so that the electrode lead 12 is bonded to the battery case 13. Accordingly, the electricity generated from the electrode assembly 10 is prevented from flowing through the electrode lead 12 to the battery case 13, thus providing an electrical isolation of the battery case 13 from the electrode assembly 10. The insulating part 14 may be made of an insulator material, such as a dielectric material or a resin. For example, the insulating part 14 may be made of a material having, at a temperature of 20 °C, an electrical conductivity of 10⁻⁸ S/cm or less, and/or a resistivity of 10⁸ Ω·cm or more. For example, a thin insulating tape that may be easily attached to the electrode lead 12 may be used as the insulating part 14. Various materials and structures may be used to insulate the electrode lead 12.

One end of the electrode lead 12 may be connected to the electrode tab 11. The other end of the electrode lead 12 may protrude outward from the battery case 13. The electrode lead 12 may include a positive electrode lead 121. The positive electrode lead 121 may have one end connected to a positive electrode tab 111 and extend in a direction in which the positive electrode tab 111 protrudes. The electrode lead 12 may include a negative electrode lead 122. The negative electrode lead 122 may have one end connected to a negative electrode tab 112 and extends in a direction in which the negative electrode tab 112 protrudes. The respectively other end of the positive electrode lead 121 and the negative electrode lead 122 may protrude outward from the battery case 13, as for example illustrated in FIG. 1. The electricity generated in the electrode assembly 10 may be conducted to the outside in this manner. Further, as the positive electrode tab 111 and the negative electrode tab 112 protrude in various directions, the positive electrode lead 121 and the negative electrode lead 122 may also extend in these various directions.

The positive electrode lead 121 and the negative electrode lead 122 may be made of materials different from each other. For example, the positive electrode lead 121 may be made of an aluminum (Al) material, which may also be the material of the positive electrode collector. The negative electrode lead 122 may be made of a copper (Cu) material or nickel (Ni)-coated copper material, which may also be the material of the negative electrode collector. A portion of the electrode lead 12 protruding outward from the battery case 13 may serve as a terminal part, which may be electrically connected to an external terminal.

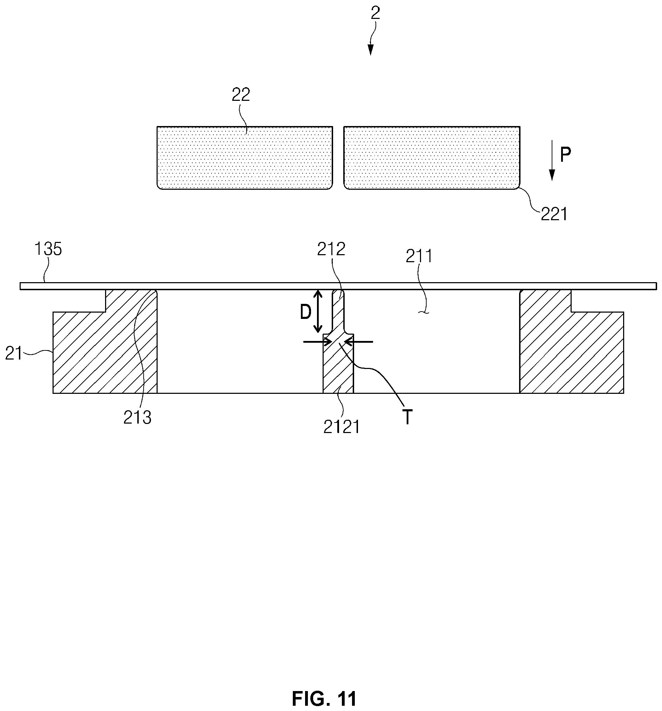

The battery case 13 may be provided as a pouch to accommodate the electrode assembly 10 therein. The pouch, or pouch-type battery case, may be made of a flexible material. Hereinafter, the battery case 13 is described as being a pouch for the sake of simplicity without limitation of the claimed subject matter. When the flexible pouch film 135 is drawn by using a punch 22 (illustrated in FIG. 11) or the like, a portion of the flexible pouch film 135 may be drawn to form a cup portion 133 that includes an accommodation space 1331 to accommodate the electrode assembly 10 therein. The battery case 13 may be manufactured in this manner.

The accommodation space 1331 may have a substantially flat bottom part that is recessed from the side portion 134, a bridge 136 and a degassing portion 137 (described below). The accommodation space 1331 may comprise a sidewall surrounding the bottom part and extending to the side portion 134, the bridge 136 and the degassing portion 137. The accommodation space 1331 may have a bag-like shape. The accommodation space 1331 may have a pan-, trough- or a tray-like shape on either side or on both sides. The bottom part of the accommodation space 1331 may have a general geometrical shape of a rectangular, wherein the corners of the rectangular may be rounded.

The battery case 13 may be sealed after accommodating the electrode assembly 10 so that a portion of the electrode lead 12 is exposed. The battery case 13 may include the first case 131 and the second case 132 as illustrated in FIG. 1. Either or both of the first case 131 and the second case 132 may have the above-described cup portion 133 such to provide the accommodation space 1331 to accommodate the electrode assembly 10. For example, the first case 131 may provide the accommodation space 1331 to accommodate the electrode assembly 10, and the second case 132 may be provided to cover the accommodation space 1331 on top so as to maintain the electrode assembly 10 in the battery case 13. The first case 131 and the second case 132 may be manufactured (i.e., dimensioned, shaped and arranged) such to be joined on the corresponding sides as illustrated in FIG. 1, however without being limited thereto. The first and second cases 131, 132 may be manufactured in various ways and may be manufactured, for example, individually and separately from each other.

When shaping the pouch film 135, for example by a drawing process as described herein, a single cup portion 133 may be formed in the pouch film 135. Alternatively, two cup portions 133 may be formed, e.g., by drawing, in the pouch film 135. For example, as illustrated in FIG. 1, the cup portion 133 may be formed in both the first case 131 and the second case 132. Here, a depth D of the cup portion 133 formed in the first case 131 and a depth of the cup portion formed in the second case 132 may be equal. Alternatively, the depths D of the cup portions in the first and second cases 131, 132 may be different from each other.

After accommodating the electrode assembly 10 in the accommodation space 1331 provided in the cup portion 133 of the first case 131, the battery case 13 may be folded about a bridge 136 so that the two cup portions 133 face each other. The bridge 136 may be formed between the two cup portions 133 in the battery case 13. As shown in FIG. 1, the second case 132 may also comprise the cup portion 133 to accommodate the electrode assembly 10 from an opposite side to the first case 132, e.g., from above. The two cup portions 133 may accommodate one electrode assembly 10 in this manner, in particular to accommodate an electrode assembly 10 with an increased thickness exceeding the depth D of the cup portion 133 of the first case 131. Also, the first case 131 and the second case 132 are integrally connected (i.e., are formed as a single piece)as the battery case 13 is folded. As such, the number of end faces required to be sealed during a sealing process may be reduced. Thus, the process speed may be enhanced, and the number of sealing processes may be reduced.

The battery case 13 may include the cup portion 133 which has the accommodation space 1331 for accommodating the electrode assembly 10; and a degassing portion 137 which is formed on a side of the cup portion 133. The degassing portion 137 may allow a gas generated inside the cup portion 133 to be discharged through a degassing hole (not shown in the drawings). The electrode assembly 10 may be accommodated in the cup portion 133 of the battery case 13. When an activation process is performed after an electrolyte is injected into the battery case 13, a gas may be generated inside the battery case 13. Then a degassing process may be performed via the degassing portion 137 to discharge the gas to the outside.

The electrode lead 12 may be connected to the electrode tab 11 of the electrode assembly 10. The insulating part 14 may be formed on a portion of the electrode lead 12. Then, the electrode assembly 10 may be accommodated in the accommodation space 1331 provided in the cup portion 133 of the first case 131. Then the pouch film 135 may be folded about the bridge 136 such that the second case 132 covers the electrode assembly 10 from above. Subsequently, the electrolyte may be injected into the accommodation space 1331. Then the sides 134, which extend outward from the cup portions 133 of the first case 131 and the second case 132, may be sealed.

The electrolyte may allow lithium ions generated by an electrochemical reaction of the electrode during charging and discharging of the secondary battery 1 to move. The electrolyte may include a non-aqueous organic electrolyte, which is a mixture of a lithium salt and a high-purity organic solvent. Alternatively or additionally, the electrolyte may include a polymer using a polymer electrolyte. Furthermore, the electrolyte may also include a sulfide-based, oxide-based, or polymer-based solid electrolyte. The solid electrolyte may be flexible enough to be easily deformed by an external force. A pouch-type secondary battery 1 may be manufactured in the manner described above.

FIG. 2 is a cross-sectional view of the pouch film 135 according to the example.

The pouch, which may refer to the battery case 13 of the pouch-type secondary battery 1, may be manufactured by drawing the pouch film 135. The pouch may be manufactured by forming the cup portion 133 by drawing the pouch film 135 using the punch 22 or the like.

As illustrated in FIG. 2, the pouch film 135 may include a sealant layer 1351, a moisture barrier layer 1352, a surface protection layer 1353, and a drawing assistance layer 1354. Alternatively, the pouch film 135 may include only some of these layers 1351, 1352, 1353 and 1354. Furthermore, the layers 1351, 1352, 1353 and 1354 may be stacked in a different order from the example illustrated in FIG. 2.

The sealant layer 1351 may be made of a first polymer. The sealant layer 1351 may be formed as an innermost layer (with respect to the accommodation space 1331) and come into direct contact with (or may be arranged the closest to) the electrode assembly 10. The innermost layer may be a layer which is positioned farthest away from the moisture barrier layer 1352 in the direction toward the electrode assembly 10.

When the pouch film 135 having the stack structure described above is drawn using the punch 22 or the like, a portion of the pouch film 135 may be drawn to form the cup portion 133 that includes the accommodation space 1331, which may have a bag-like shape as mentioned above. The battery case 13 may be manufactured in this manner. When the electrode assembly 10 is accommodated in the accommodation space 1331, the electrolyte may be injected. Then the first case 131 and the second case 132 may be brought into contact with each other so as to face each other. The sides 134 may be then heat-pressed. The sealant layers 1351 may be bonded to each other in this manner, and the pouch may be sealed.

It may be advantageous that the sealant layer 1351 is an electrical insulator because the sealant layer 1351 is in direct contact with the electrode assembly 10. It may also be advantageous that the sealant layer 1351 has a high corrosion resistance because the sealant layer 1351 comes into contact with the electrolyte. Further, it may be advantageous that the sealant layer 1351 seals tightly to prevent material exchange between the inside and the outside of the case. The side portion 134 in which the sealant layers 1351 are bonded to each other may have an increased thermal bonding strength. Generally, the first polymer used to manufacture the sealant layer 1351 may be made of one or more materials selected from the group consisting of polyethylene, polypropylene, polycarbonate, polyethylene terephthalate, polyvinyl chloride, acryl-based polymer, polyacrylonitrile, polyimide, polyamide, cellulose, aramid, nylon, polyester, polyparaphenylene benzobisoxazole, polyarylate, Teflon, and glass fiber. In particular, polyolefin-based resin such as polypropylene (PP) or polyethylene (PE) is mainly used. Polypropylene (PP) may be used to manufacture the sealant layer 1351, since PP has excellent mechanical properties such as tensile strength, rigidity, surface hardness, wear resistance and thermal resistance, and excellent chemical properties such as corrosion resistance. In addition, casted polypropylene, acid modified polypropylene, or polypropylene-butylene-ethylene terpolymer may also be used. The acid modified polypropylene may be maleic anhydride polypropylene (MAH PP). The sealant layer 1351 may have a single layer structure made of one material, or a composite layer structure, in which two or more materials may constitute respective layers.

The sealant layer 1351 may have a thickness of about 60 µm to about 100 µm, or 70 µm to 90 µm, or about 75 µm to about 85 µm. If the thickness of the sealant layer is less than about 60 µm, the sealing durability may be deteriorated and, for example, the inside of the sealant layer may be broken when sealed. If the thickness of the sealant layer is greater than about 100 µm, the overall thickness of the pouch may become excessively large, and a density of energy in relation to the volume of the secondary battery may be deteriorated.

The moisture barrier layer 1352 may be stacked between the surface protection layer 1353 and the sealant layer 1351 to ensure the mechanical strength of the pouch, to block a gas or moisture from the outside of the secondary battery 1 from entering, and to prevent a leakage of the electrolyte. The moisture barrier layer 1352 may be made of metal. In particular, the moisture barrier layer 1352 may be made of metal including, for example, an alloy from AA80XX aluminum alloy series. Such aluminum material may be lightweight while ensuring a desired level of mechanical strength, and may also ensure remedy of electrochemical properties of the electrode assembly 10 and the electrolyte, heat radiation and the like.

In the related art, an alloy from the AA30XX aluminum alloy series has been frequently used. However, the iron content may be equal to or less than about 0.7 wt% and the mechanical strength thus may be low. In view of this, an aluminum alloy from the AA80XX aluminum alloy series may be used instead. Such aluminum alloy may include various materials. For example, the materials may include one or two or more selected from the group consisting of iron (Fe), copper (Cu), chrome (Cr), manganese (Mn), nickel (Ni), magnesium (Mg), and zinc (Zn).

The moisture barrier layer 1352 may have a thickness of about 50 µm to about 80 µm, or 50 µm to 70 µm, or about 55 µm to about 65 µm. In the related art, the thickness of the moisture barrier layer has been less than about 50 µm, resulting in a decrease of the formability. Accordingly, when drawing the pouch film 135, there is a limitation in forming a cup portion having an almost vertical outer wall when the cup portion is to have an increased depth. Also, there may be a limitation in reducing a curvature radius of an edge of the cup portion. On the other hand, if the thickness of the moisture barrier layer is greater than about 80 µm, not only does the manufacturing costs increase, but the overall thickness of the secondary battery excessively increases. As a result, the energy density to the volume of the secondary battery may be deteriorated. If the thickness of the sealant layer is reduced to less than about 60 µm so as to reduce the overall thickness of the secondary battery, the sealing durability may be deteriorated.

The surface protection layer 1353 may be made of a second polymer. The surface protection layer 1353 may be arranged as an outermost layer from the electrode assembly 10 or the accommodation space 1331. The surface protection layer 1353 may electrically insulate the electrode assembly 10 from the outside while protecting the secondary battery 1 from friction and collision with the outside. Here, the outermost layer may represent a layer which is positioned farthest away from the moisture barrier layer 1352 in the direction away from the electrode assembly 10. The second polymer used to manufacture the surface protection layer 1353 may be one or more materials selected from the group consisting of polyethylene, polypropylene, polycarbonate, polyethylene terephthalate, polyvinyl chloride, acryl-based polymer, polyacrylonitrile, polyimide, polyamide, cellulose, aramid, nylon, polyester, polyparaphenylene benzobisoxazole, polyarylate, Teflon, and glass fiber. In particular, it may be advantageous to use polymers which have a good wear resistance and thermal resistance, such as polyethylene terephthalate (PET). The surface protection layer 1353 may have a single layer structure made of one material, or a composite layer structure, in which two or more materials may constitute respective layers.

The surface protection layer 1353 may have a thickness of about 5 µm to about 25 µm, or 6 µm to 20 µm, or about 7 µm to about 12 µm, or 8 µm to 10 µm. If the thickness of the surface protection layer is less than about 5 µm, the external insulation may be deteriorated. If the thickness of the surface protection layer is greater than about 25 µm, the overall thickness of the pouch may become too large, such that the density of energy in relation to the volume of the secondary battery may be deteriorated.

PET is not expensive, has an excellent durability and provides electrical insulation. However, PET may have poor adhesion with the aluminum, which may be used as the moisture barrier layer 1352. Further, PET may exhibit a different behavior than the aluminum when subjected to stress and a drawing process. Thus, when the surface protection layer 1353 is bonded directly to the moisture barrier layer 1352, the surface protection layer 1353 may be peeled off from the moisture barrier layer 1352 during a drawing process. As a result, the moisture barrier layer 1352 may not be uniformly drawn and, thus, the formability may be deteriorated.

The battery case 13 may include the drawing assistance layer 1354. The drawing assistance layer 1354 may be made of a third polymer. The drawing assistance layer 1354 may be stacked between the surface protection layer 1353 and the moisture barrier layer 1352. The drawing assistance layer 1354 may be stacked between the surface protection layer 1353 and the moisture barrier layer 1352 to prevent the surface protection layer 1353 and the moisture barrier layer 1352 from being peeled off during a drawing process. The third polymer used to manufacture the drawing assistance layer 1354 may be one or more materials selected from the group consisting of polyethylene, polypropylene, polycarbonate, polyethylene terephthalate, polyvinyl chloride, acryl-based polymer, polyacrylonitrile, polyimide, polyamide, cellulose, aramid, nylon, polyester, polyparaphenylene benzobisoxazole, polyarylate, Teflon, and glass fiber. Particularly, the nylon resin is easily bonded to the polyethylene terephthalate (PET) of the surface protection layer 1353 and has a similar behavior, when drawn, to the aluminum alloy of the moisture barrier layer 1352. For these reasons, the third polymer may be made of a nylon resin. Also, the drawing assistance layer 1354 may have a single layer structure made of one material, or a composite layer structure, in which two or more materials may constitute respective layers.

According to the related art, the moisture barrier layer typically has a thickness of about 40 µm, and the drawing assistance layer has an extremely small thickness of about 15 µm. Accordingly, the thickness ratio of the drawing assistance layer to the moisture barrier layer is typically about 1 : 2.67, and a thickness proportion of the moisture barrier layer is significantly high.

In contrast, if the moisture barrier layer 1352 has a thickness of about 50 µm to about 80 µm, or 50 µm to 70 µm, or about 55 µm to about 65 µm as disclosed herein, the formability of the moisture barrier layer 1352 may be enhanced. In order to enhance the formability of the drawing assistance layer 1354, the drawing assistance layer 1354 may have a thickness of about 20 µm to about 50 µm, or 22 µm to 40 µm, or about 25 µm to about 38 µm. If the thickness is less than about 20 µm, the drawing assistance layer may not conform to the enhanced formability of the moisture barrier layer and thus may be damaged during a drawing process. On the other hand, if the thickness is greater than about 50 µm, the overall thickness of the pouch may increase, the volume of the secondary battery may increase, and the energy density may be deteriorated. Particularly, the thickness ratio of the drawing assistance layer 1354 to the moisture barrier layer 1352 may be less than about 1 : 2.5. Accordingly, a thickness proportion of the drawing assistance layer 1354 may increase stronger than known from the related art. However, if the thickness of the drawing assistance layer 1354 excessively increases, the overall thickness of the pouch may increase. Thus, the thickness ratio may be greater than about 1 : 1.5 so as to prevent an excessively large overall thickness. Hence, the thickness ratio may be about 1 : 1.5 to about 1 : 2.5.

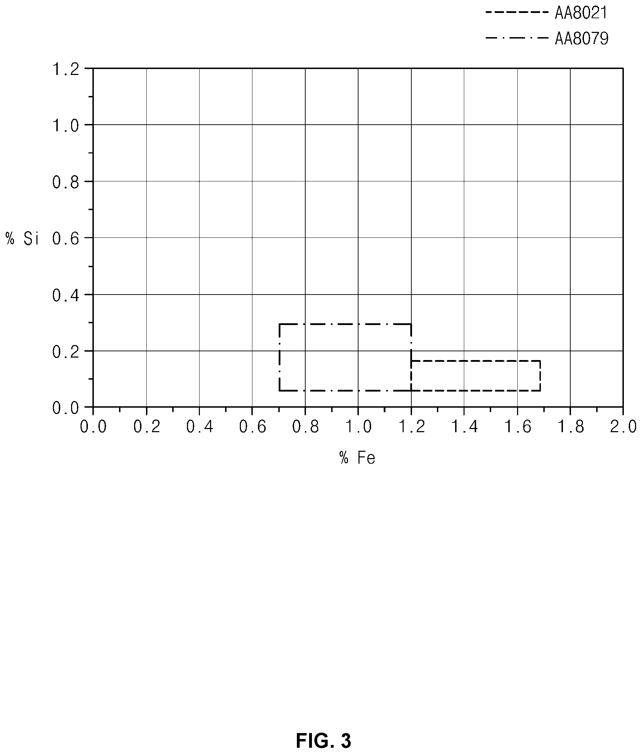

FIG. 3 is a graph showing iron and silicon contents in an AA8079 aluminum alloy and an AA8021 aluminum alloy.

The mechanical strength is enhanced with increasing amount of iron contained in the aluminum alloy, and the flexibility is enhanced with decreasing iron contained in the aluminum alloy. As illustrated in FIG. 3, the alloy AA8079 among the aluminum alloys may include about 0.6 wt% to about 1.2 wt% of iron and about 0.3 wt% or less of silicon. Hence, when the moisture barrier layer 1352 is made of the AA8079 aluminum alloy, it may contain a relatively small amount of iron, which may increase the flexibility but decrease the strength, which may thereby limit the formability.

In comparison, as illustrated in FIG. 3, the AA8021 aluminum alloy may include about 1.2 wt% to about 1.7 wt% of iron, and particularly about 1.3 wt% to about 1.7 wt% of iron, and about 0.2 wt% or less of silicon. Hence, when the moisture barrier layer 1352 is made of the AA8021 aluminum alloy, it may contain a relatively large amount of iron, which may increase the tensile strength as well as the elongation rate.

When a tensile force is applied to a material, the relationship between the tensile strength and the elongation rate may be represented in a graph. Here, when the vertical axis of the graph represents the tensile strength and the horizontal axis represents the elongation rate, the area below the graph may represent the toughness of the material. The toughness may represent the ability to withstand fracture. Thus, the higher the toughness of a material, the further the material may be drawn without breaking. Thus, when the moisture barrier layer 1352 is made of an AA8021 aluminum alloy, the tensile strength and elongation rate may be improved. Accordingly, the toughness may be increased and the formability may be enhanced.

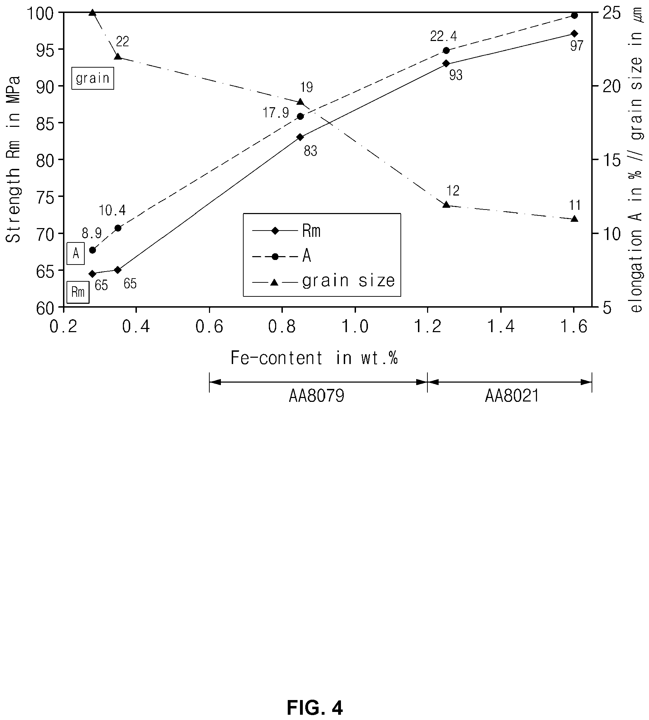

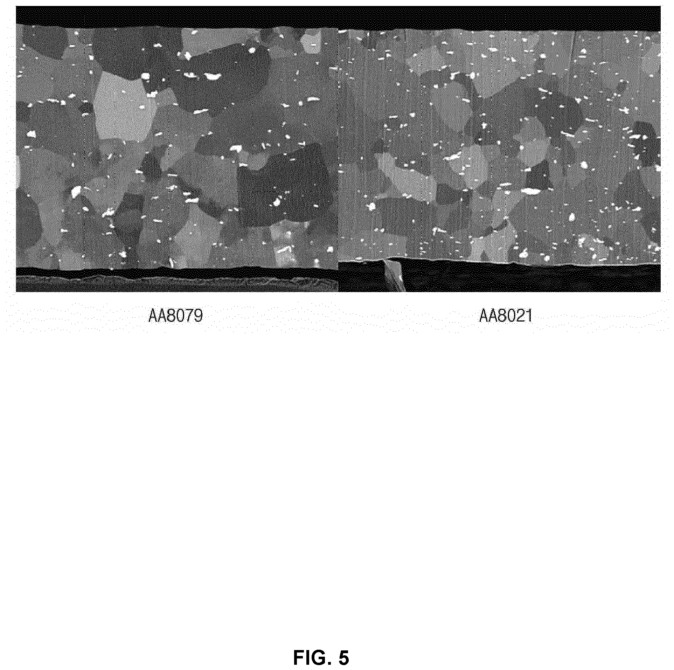

FIG. 4 is a graph showing changes in a tensile strength Rm, an elongation rate, and a grain size according to the iron content in each of the AA8079 aluminum alloy and the AA8021 aluminum alloy. FIG. 5 is an enlarged SEM image of grains of each of the AA8079 aluminum alloy and the AA8021 aluminum alloy.

As illustrated in FIG. 4, the tensile strength, the elongation rate and the grain size are changed as a function of the iron content in the aluminum alloy. Specifically, the tensile strength and elongation rate are proportional to the iron content, and thus, the tensile strength and elongation rate may increase as the iron content increases. On the other hand, the grain size is inversely proportional to the iron content, and thus, the grain size may decrease as the iron content increases.

As described above, the AA8079 aluminum alloy may contain about 0.6 wt% to about 1.2 wt% of iron, and thus, the grain size may be relatively large, for example, about 13 µm to about 21 µm, as illustrated in FIG. 5. Thus, the internal stress may be less dispersed during a drawing process, and the number of pin holes may increase. Thus, the formability of the battery case 13 may be deteriorated.

In contrast, the AA8021 aluminum alloy may contain about 1.2 wt% to about 1.7 wt% of iron, and thus, the grain size may be relatively small, for example, about 10 µm to about 13 µm, as illustrated in FIG. 5. Thus, the internal stress may be better dispersed during a drawing process, and the number of pin holes may decrease. Thus, the formability of the battery case 13 may be enhanced.

Thus, the aluminum alloy used to manufacture the moisture barrier layer 1352 according to an example may include about 1.2 wt% to about 1.7 wt% of iron, particularly, about 1.3 wt% to about 1.7 wt% of iron. Also, the aluminum alloy may include about 0.2 or less wt% of silicon. Also, the grain size may be about 10 µm to about 13 µm. That is, in an example, the aluminum alloy used to manufacture the moisture barrier layer 1352 may be the alloy no. AA8021.

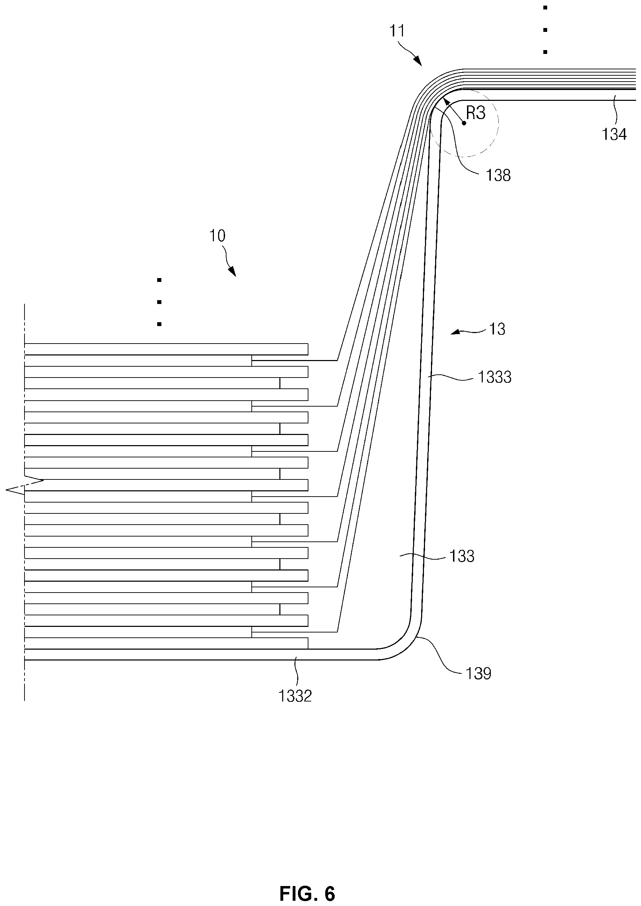

FIG. 6 is an enlarged schematic view of a die edge 138 and an electrode tab 11 according to a comparative example of the present invention.

A cup portion 133 may include various edge types. Specifically, the cup portion 133 may include a punch edge 139 formed corresponding to a pressing edge 221 of a punch 22 and a die edge 138 formed corresponding to a pressing edge 213 of a die 21. The punch edge 139 may connect outer walls 1333 to a bottom portion 1332. The outer walls 1333, which may also be referred to as sidewalls 1333 of the cup portion 133, may fully or partially surround the boottom portion 1332. The die edge 138 may connect the outer walls 1333 to one or more side portions 134.

If the pressing edge of the die is not rounded, the pressing edge of the die may be sharp. Thus, when forming the pouch film 135, stress may be concentrated on the die edge of the cup portion, facilitating the occurrence of a crack. To solve such a problem, the pressing edge 213 of the die 21 may be rounded. As a result, the die edge 138 of the cup portion 133 may be rounded as illustrated in FIG. 6, and the stress concentrated on the die edge 138 may be dispersed to some extent. Yet, if the depth of the cup portion exceeds a certain threshold, a crack may still occur at the pouch film 135 when a curvature radius of the die edge of the cup portion is about 2 mm or less. Here, the threshold of the depth may be about 7 mm when one cup portion 133 is formed, and may be about 6.5 mm when two cup portions 133 are formed.

Herein, the die edge 138 being rounded may represent that a curved surface is formed along a curvature. The curved surface may have entirely uniform curvature. However, the subject matter is not limited thereto, and the curved surface may have partially or entirely nonuniform curvature. The curvature may be defined by a respective curvature radius. The curvature may be a two-dimensional curvature along a corresponding edge (such as the punch edge 139 and/or the die edge 138 as described herein). A uniform curvature may mean that the respective curved surface is formed with a fixed curvature radius around a fixed central point or around a (cylinder) symmetry axis.

The sealant layer 1351 may have a thickness of about 60 µm to about 100 µm, or 70 µm to 90 µm, or about 75 µm to about 85 µm. The moisture barrier layer 1352 may have a thickness of about 50 µm to about 80 µm, or 55 µm to 70 µm, or about 55 µm to about 65 µm. The moisture barrier layer 1352 may contain an aluminum alloy of the AA80XX series, particularly anAA8021 alloy. The formability of the moisture barrier layer 1352 may be enhanced in this manner. Accordingly, as shown in FIG. 6, the other walls 1333 of the cup portion 133 may be formed by the drawing process so as to be almost vertical, even though the cup portion 133 has a depth that exceeds a threshold as discussed above, even though the cup portion 133 has a depth that exceeds a threshold. Further, the curvature radii R3 of the edges 138 and 139 of the cup portion 133 may also be reduced.

Alternatively, the depth of the cup portion 133 may be below the threshold when drawing the pouch film 135, such that outer walls 1333 of the cup portion 133 may become almost vertical, and the curvature radii R3 of the edges 138 and 139 of the cup portion 333 may also be reduced.

Specifically, the outer walls 1333 of the cup portion 133 may be formed almost vertically such that an inclination angle from the bottom portion 1332 is about 90° to about 95°, or 90° to 94°, or about 90° to about 93°. At least one of the edges 138 and 139 of the cup portion 133 may be rounded with the curvature radius R3 being about 1 mm or less, or 0.9 mm or less, or 0.8 mm or less, or about 0.7 mm or less. In this manner, it is possible to prevent a crack from occurring even when the curvature radius is as small as below 1 mm or below 0.7 mm.

With the battery case 13 being manufactured as described above, the volume of an accommodation space 1331 may be enlarged. This may also increase the volume of an electrode assembly 10 accommodated inside the accommodation space 1331, and may further increase the energy efficiency with respect to the volume of a secondary battery 1. Also, the manufacturing costs may not significantly increase, and the entire thickness of the pouch may not significantly increase without reducing the thickness of the sealant layer 1351. Also, the sealing durability may not be deteriorated. Also, the pouch-type battery case 13 and the pouch-type secondary battery 1 may be overall provided with sharp shapes. Accordingly, the secondary battery 1 may have an excellent appearance and an enhanced commercial value.

As the outer wall 1333 of the cup portion 133 becomes almost vertical and the curvature radii of the edges 138 and 139 of the cup portion 133 are reduced, there may be interference between the die edge 138 and the electrode tab 11 as illustrated in FIG. 6. Specifically, the electrode tab 11 protrudes from an electrode stacked inside the electrode assembly 10, and thus a plurality of electrode tabs 11 may be formed as many as the number of electrodes inside the electrode assembly 10. Also, the plurality of electrode tabs 11 may be stacked on one another, connected to each other and placed on the side portion 134. The electrode tabs 11 may rest on the die edge 138 and the side portion 134. As the curvature radius R3 of the die edge 138 is reduced, the die edge 138 may further protrude into the cup portion 133, which may deteriorate the flexibility at the die edge 138. Furthermore, the distance between the die edge 138 and the electrode tabs 11 may also be reduced, and the die edge 138 may apply a pressure to the electrode tab 11. Thus, an interaction between the die edge 138 and the electrode tab 11 may occur. Particularly, as the number of the electrode tabs 11 increases, the thickness of the stacked electrode tabs 11 increases. Thus, a gap between the electrode tab 11 and the outer wall 1333 of the cup portion 133 may be reduced. As a result, with the die edge 138 further applying a pressure to the electrode tab 11, the electrical power supply may be deteriorated. Furthermore, the electrode tab 11 may be even cut off.

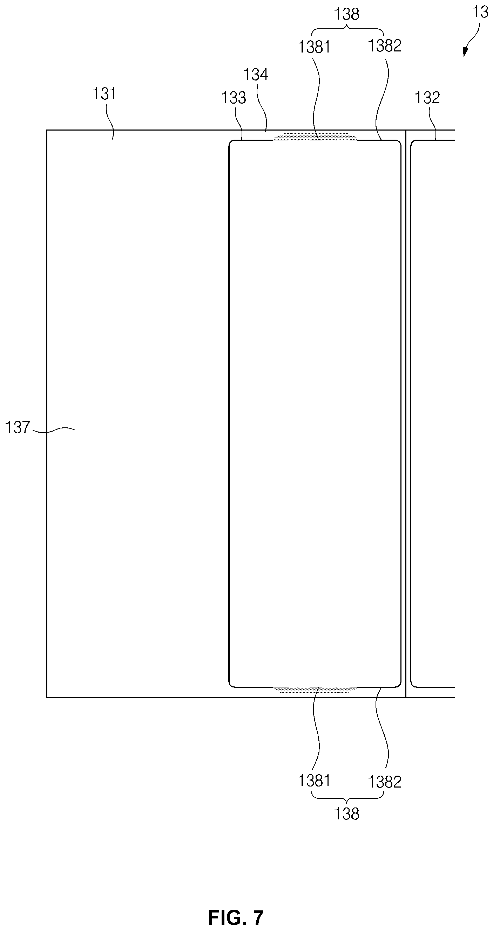

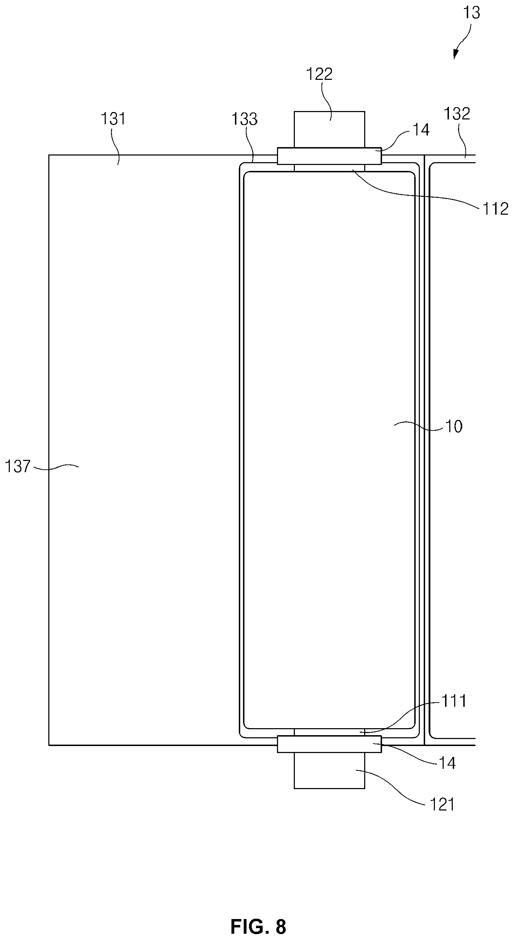

FIG. 7 is a partial plan view of a battery case 13 according to an example. FIG. 8 is a partial plan view showing a state in which an electrode assembly 10 is inserted into a cup portion 133 of the battery case 13 according to an example.

The claimed subject matter may provide for an increased formability of the pouch film 135. The outer wall 1333 of the cup portion 133 may be formed to be approximately (substantially) vertical. The curvature radii R1 and R2 of the die edge 138 of the cup portion 133 may be reduced. At the same time, it is the occurrence of interaction between the die edge 138 and the electrode tab 11 may be effectively prevented.

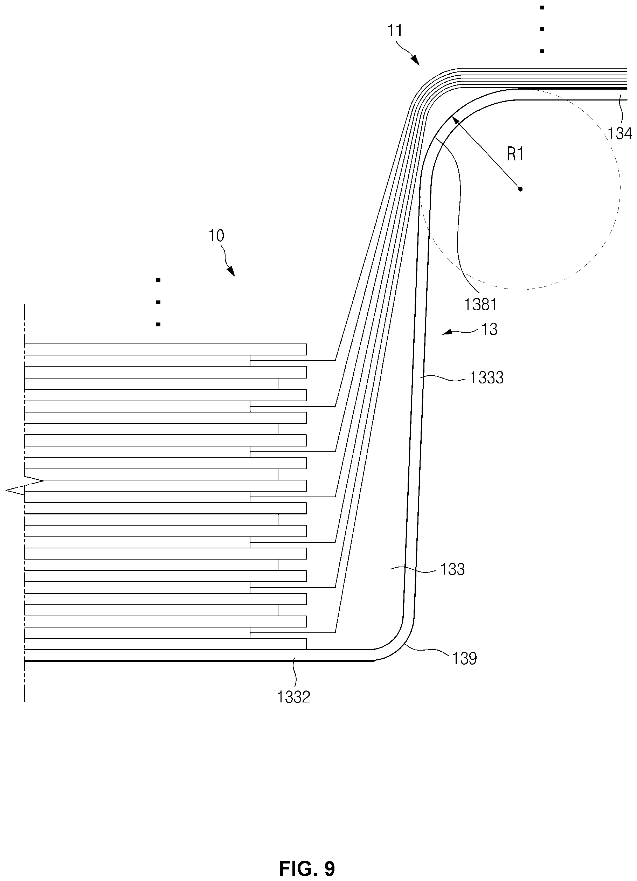

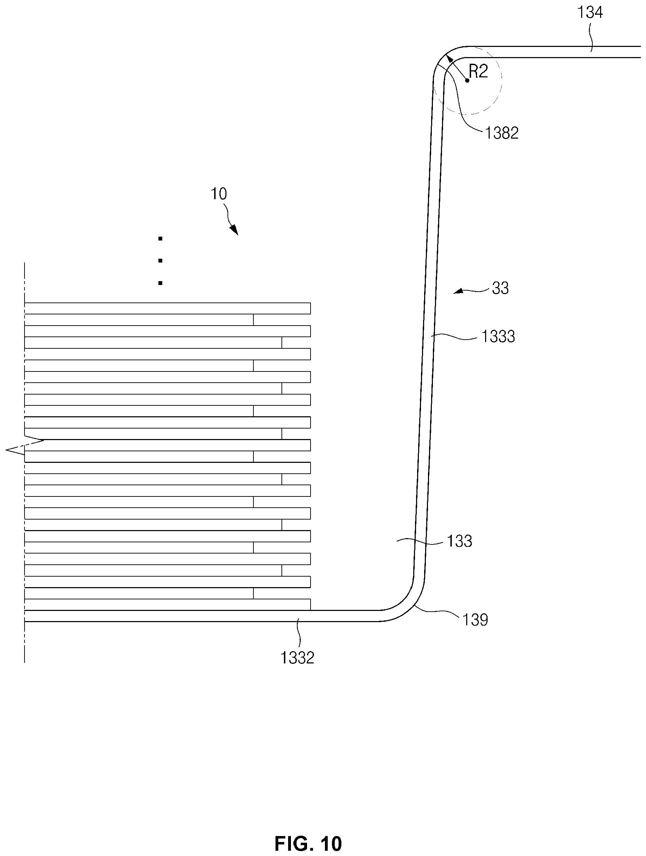

To this end, a pouch-type battery case 13 according to an example may include a cup portion 133 and die edges 138. The cup portion 133 may accommodate therein an electrode assembly 10. The electrode assembly 10 may be formed by stacking an electrode and a separator. The die edges 138 may connect an outer wall 1333 of the cup portion 133 to a side portion 134 extending from the outer wall 1333. At least one of the die edges 138 may include a first region 1381 and a second region 1382. The first region 1381 may be rounded with a first curvature radius R1 (illustrated in FIG. 9). The second region 1382 may be rounded with a second curvature radius R2 (illustrated in FIG. 10). The second curvature radius R2 is smaller than the first curvature radius R1.

A pouch-type secondary battery 1 according to an example may include an electrode assembly 10 and a battery case 13. The electrode assembly 10 may be formed by stacking an electrode and a separator. The battery case 13 may be as described above, and may include a cup portion 133 that accommodates therein the electrode assembly 10. The battery case 13 may include die edges 138 which connect an outer wall 1333 of the cup portion 133 to a side portion 134 extending from the outer wall 1333. At least one of die edges 138 may include a first region 1381 and a second region 1382. The first region 1381 may be rounded with a first curvature radius R1 . The second region 1382 may be rounded with a second curvature radius R2 . The second curvature radius R2 is smaller than the first curvature radius R1.

As described above, the battery case 13 may include outer walls 1333 which may surround the cup portion 133. The battery case 13 may include the side portion 134 which extends outwards from the outer walls 1333. The die edges 138 may connect the outer walls 1333 to the side portion 134.

At least one of the die edges 138 may have regions that are rounded with two different curvature radii R1 and R2 . As illustrated in FIG. 7, at least one of the die edges 138 may include a first region 1381 that is rounded with a first curvature radius R1 . The same die edge 138 may further comprise a second region 1382 that is rounded with a second curvature radius R2, wherein the second curvature radius R2 is smaller than the first curvature radius R1.

The first curvature radius R1 may be about 1.7 mm to about 2.7 mm, or 1.9 mm to 2.5 mm, or 2.1 mm to 2.3 mm. The second curvature radius R2 may be about 1.2 mm or less, or 1.0 mm or less, or 0.9 mm or less, or about 0.7 mm or less. The first curvature radius R1 may be about 1.5 times to about 4 times as large as the second curvature radius R2 . The ratio of the first curvature radius R1 to the second curvature R2 radius may be 1.7 to 3.5, or 1.9 to 3.0, or 2.1 to 2.5.

With reference to FIGS. 7 and 8, the first region 1381 may be a region of the die edge 138 on (and/or in) which the electrode tab 11 is be arranged. As described above, the electrode tab 11 may protrude from one side of the electrode assembly 10. The second region 1382 may be a region on (an/or in) which the electrode tab 11 is not be arranged. For this purpose, the first region 1381 may be rounded with a relatively large curvature radius that is the first curvature radius R1, thereby facilitating the receiving of the electrode tab 11, while the second region 1382, which does not need to receive the electrode tab 11, may be rounded with a relatively small curvature radius that is the second radius R2, thereby increasing the compactness of the case.

The width of the first region 1381 may correspond to the width of the electrode tab 11 so that the electrode tab 11 may stably rest on the first region 1381. The widths as used herein may represent a one-dimensional measure in a widthwise direction of the respective feature. The widthwise direction of the first region 1381 and the second region 1382 of a same die edge 138 may be parallel, and be, for example, parallel to an elongation direction of the respective die edge 138. The widthwise direction may be perpendicular to a plane in which the curvature radii of the first and second regions 1381, 1382 are determined. In case the first case 131 or the second case 132 (or the respective cup portion 133) has a rectangular tray-like shape, the widthwise direction may be parallel to a respective side of the rectangular tray-like shape. The widthwise direction may be perpendicular to the bridge 136. The width of the first region 1381 may be equal to or slightly greater than the width of the electrode tab 11. If the width of the first region 1381 is less than the width of the electrode tab 11, the electrode tab 11 may not stably rest in/on the die edge 138.

The die edge 138 may be formed along the periphery of the outer walls 1333 of the cup portion 133. For example, the die edges 138 may be formed as many times as the number of outer walls 1333. For example, as illustrated in FIG. 7, when the cup portion 133 has a quadrangular tray-like shape, four die edges 138 may be formed. However, the number of die edges 138 may be diversely changed according to the number of the outer walls 1333 of the cup portion 133. Also, the cup portion 133 may have a shape with non-straight sides, and the width may be determined along a curve of the respective edge.

The electrode tabs 11 may protrude in different directions from the electrode assembly 10 as discussed above, and the first region 1381 may be formed in the die edges 138 corresponding to each of the electrode assembly 10 that is to be received.

For example, as illustrated in FIG. 7, the first region 1381 may be formed in each of two opposite die edges 138. The first region 1381 may be provided at an approximately central portion of the die edge 138. The second region 1382 may be formed on either side or both sides of the first region 1381. In the example shown in FIG. 7, each of the two die edges 138 may be divided into one first region 1381 and two second regions 1382 sandwiching the respective first region 1381.

The claimed subject matter is not limited thereto. For example, the electrode tabs 11 may protrude from a same side of the electrode assembly 10 in a same direction, and first regions 1381 (with the number corresponding to the number of electrode tabs 11) may be formed in a single die edge 138 that receives the electrode tabs 11. Second regions 1382 may be formed between and laterally adjacent to each of the first regions 1381.

The first region 1381 and the second region 1382 are rounded with different curvature radii R1 and R2. This may result in a stepped portion being formed between adjacent first and second regions 1381, 1382. Alternatively, a connection region may be formed between the first region 1381 and the second region 1382 so as to prevent the formation of a stepped portion. For example, the connection region may be rounded, flattened or otherwise smoothed to remove sharp edges. For example, the curvature radius of the connection region may change gradually and continuously from the first curvature radius R1 to the second curvature radius R2 as the connection region extends from the first region 1381 to the second region 1382. Accordingly, the first region 1381 may be smoothly connected to the second region 1382 without a stepped portion.

FIG. 9 is an enlarged schematic view of a first region 1381 of a die edge 138 and an electrode tab 11 according to an example. FIG. 10 is an enlarged schematic view of a second region 1382 of the die edge 138 of a cup portion 133 and the electrode tab 11 according to an example.

As described above, the first region 1381, on which the electrode tab 11 may rest, is rounded with a relatively large curvature radius R1, that is the first curvature radius R1. The first curvature radius R1 may be about 1.7 mm to about 2.7 mm or any other value mentioned above. As such, as illustrated in FIG. 9, the die edge 138 may not apply any pressure to the electrode tab 11, or the pressure applied by the die edge 138 to the electrode tab 11 may be reduced. As such, it may be possible to prevent the occurrence of an interaction between the die edge 138 and the electrode tab 11 in the first region 1381, in/on which the electrode tab 11 is to be received.

On the other hand, the second region 1382, which does not receive the electrode tab 11, has a rounded shape with at a relatively small curvature radius, that is the second curvature radius R2. The second curvature radius R2 may be about 1.2 mm or less, about 0.7 mm or less, or any other value mentioned above. As such, as illustrated in FIG. 10, the energy efficiency with respect to the volume of a secondary battery 1 may be increased, and the pouch-type battery case 13 and the pouch-type secondary battery 1 may have overall sharp edges. Accordingly, the secondary battery 1 may also have an excellent appearance and an enhanced commercial value.

FIG. 11 is a schematic view of a forming apparatus 2 according to an example.

The forming apparatus 2 for forming a pouch film, for example the pouch film 135 as described above may include a die 21 and a punch 22. The die 21 may have a top surface, on which the pouch film 135 may be placed. The die 21 may include at least one forming space 211 as a recess from the top surface. The punch 22 may be disposed above the forming space 211. The punch 22 may be operable to descend (as illustrated by arrow P in FIG. 11) so as to insert the pouch film 135, which is placed on the top surface of the die 21, into the forming space 211, thereby forming the cup portion 133 of the pouch film 135.

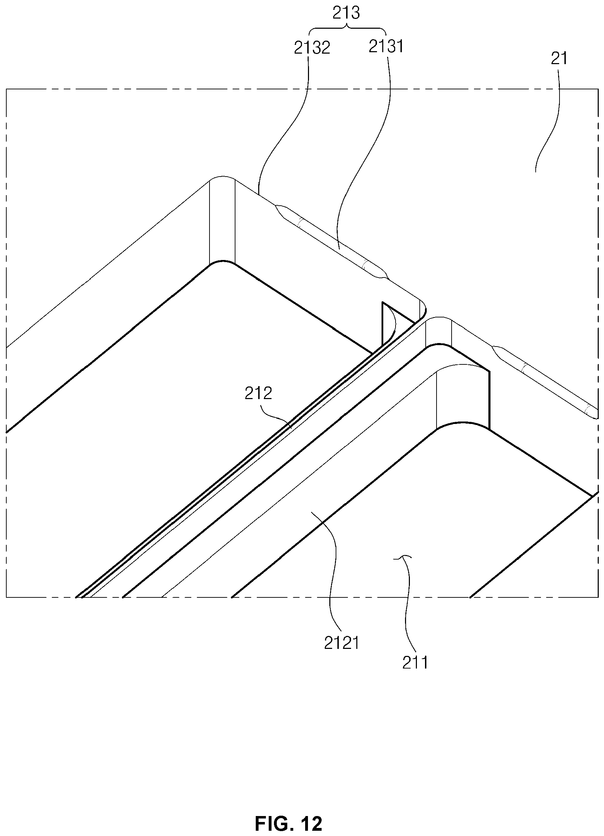

The die 21 may include pressing edges 213 which connect between the forming space 211 and the top surface of the die 21. At least one pressing edge 213 may include a first press region 2131 (also referred to herein as a third region 2131, illustrated in FIG. 12) which is rounded with a third curvature radius; and a second press region 2132 (also referred to herein as a fourth region 2132, illustrated in FIG. 12) which is rounded with a fourth curvature radius less than the third curvature radius. In particular, the first press region 2131 may correspond to the first region 1381 of the edge die 138 as described above. The first press region 2131 may be used to create the first region 1381. The second press region 2132 may correspond to the second region 1382 of the edge die 138 as described above. The second press region 2132 may be used to create the second region 1382.

When the pouch film 135 is formed by using the forming apparatus 2, only one cup portion 133 may be formed as described above. Alternatively, two neighboring cup portions 133 may be drawn. To this end, as illustrated in FIG. 11, two neighboring forming spaces 211 may be provided in the die 21. Further, a partition wall 212 may be formed between the two neighboring forming spaces 211. When the punch 22 is inserted into the two forming spaces 211 with the pouch film 135 in place such as to draw the pouch film 135, a cup portion 133 may be formed in each of a first case 131 and a second case 132 corresponding to the forming spaces 211. At the same time, a bridge 136 may also be formed between the two cup portions 133 corresponding to the partition wall 212.

The bridge 136 may be used as a reference portion when a battery case 13 is folded afterwards. When the manufacturing of a secondary battery 1 is completed, the bridge 136 may form a folding portion (not shown) on one side of the secondary battery 1. Also, the first case 131 and the second case 132 may be integrally connected to each other via the folding portion (i.e., may be formed as a single piece). As such, the number of sides 134 required for a subsequent sealing process may be reduced. Thus, the process speed may be enhanced, and the number of sealing processes may be reduced. Since the width of the folding portion is smaller, a space between an outer wall 1333 of the cup portion 133 and an electrode assembly 10 may be also reduced. Accordingly, the overall volume of the secondary battery 1 may be reduced. This may increase a density of energy in relation to the volume.

The width of the folding portion may be proportional to the thickness of the bridge 136. As mentioned above, the bridge 136 may be formed corresponding to the partition wall 212 of the die 21. Thus, a thickness of the bridge 136 may be proportional to a thickness T of the partition wall 212. It may be desirable to minimize the thickness of the bridge 136 when the pouch film 135 is formed. To this end, it is desirable to minimize the thickness T of the partition wall 212. However, if the partition wall 212 was formed such as to have an excessively large height despite a small thickness T, the partition wall 212 may be damaged during a drawing process. Particularly, whereas a bottom of the die 21 has been present according to the related art, a gas present in a space between the pouch film 135 and the forming space 211 in such a setup could not be properly discharged when the pouch film 135 was formed by a punch 22. Thus, recently, the bottom has been removed from the die 21 so as to facilitate the discharge of the gas present between the pouch film 135 and the forming space 211. However, there has been a problem that the partition wall 212 was formed to have an excessively large height.

In contrast, as illustrated in FIG. 11, an upper portion of the partition wall 212 may maintain a reduced thickness T. A reinforcement portion 2121 having a lager thickness than the thickness T of the partition wall 212 may be formed in a bottom portion of the partition wall 212. The bottom portion of the partition wall 212 may refer to a distal part from the top surface of the die 21, on which the pouch film 135 is to be received (placed). The reinforcement portion 2121 may be formed at a position below a depth D of the cup portion 133 which is to be formed in the battery case 13 (see FIG. 11). Further, the reinforcement portion 2121 may be formed at a position such that the partition wall 212 is not damaged. The accurate position of the reinforcement portion 2121 may be experimentally determined as a function of the thickness T of the partition wall 212, the material of the partition wall 212, the pressure of the punch 22, and the depth D of the cup portion 133 to be formed.

Additionally or alternatively, the thickness T of the partition wall 212 may increase gradually toward the lower portion (not shown). Accordingly, at least a portion of the cross-section of the partition wall 212 may have an approximately triangular (or tapering, or trapezoidal) shape, and an inner wall 214 of the forming space 211 formed in the partition wall 212 may be inclined with respect to a depth direction D. The accurate inclination of the inner wall 214 of the forming space 211 formed in the partition wall 212 may be experimentally determined as a function of the thickness of the upper portion of the partition wall 212, the material of the partition wall 212, the pressure of the punch 22, and the depth of the cup portion 133 to be formed. As such, the strength of the partition wall 212 may be increased, and thus it may be possible to prevent the partition wall 212 from being damaged during a drawing process.

FIG. 12 is an enlarged view of a portion of a die 21 according to an example. Here, like reference signs may indicate like features, unless structurally or functionally inappropriate or unless indicated otherwise. In particular, the features described above may apply to the die 21 of FIG. 12 accordingly.

According to embodiments of the present disclosure, at least one die edge 138 of the pouch-type battery case 13 includes the first region 1381 that is rounded with the first curvature radius R1 and the second region 1382 that is rounded with the second curvature radius R2 smaller than the first curvature radius R1.

Also, in order to manufacture the battery case 13, the die 21 according to embodiments of the present disclosure may include multiple pressing edges 213 which connect between the forming space 211 and the top surface of the die 21. At least one pressing edge 213 may include a first press region 2131, also referred to as a third region 2131, that is rounded with a third curvature radius and a second press region 2132, also referred to as a fourth region 2132, that is rounded with a fourth curvature radius smaller than the third curvature radius.

The pouch film 135 may be placed on the top surface of the die 21 so as to cover the forming space 211. The punch 22 may be disposed above the forming space 211 and may be operated to descend so as to insert the pouch film 135 into the forming space 211 of the die 31. The pouch film 135 may be formed in this manner. The cup portion 133 may be formed, and the pouch-type battery case 13 may be manufactured. The die edges 138 of the pouch-type battery case 13 may be formed corresponding to the pressing edges 213 of the die 21.

The first press region 2131 of the pressing edge 213 may correspond to the first region 1381 of the battery case 13. Also, the first curvature radius R1 of the first region 1381 may be about 1.7 mm to about 2.7 mm, or any other value indicated above. As such, the third curvature radius of the first press region 2131 may be smaller than the first curvature radius R1 by about 0.2 mm, which approximately may be the thickness of the pouch film 135. The third curvature radius may be about 1.5 mm to about 2.5 mm. The fourth region 2132 of the pressing edge 213 may correspond to the second region 1382 of the battery case 13. The second curvature radius R2 of the second region 1382 may be about 1.2 mm or less, or about 0.7 mm or less, or any other value indicated above. The fourth curvature radius of the second press region 2132 may be smaller than the second curvature radius R2 by about 0.2 mm, which approximately may be the thickness of the pouch film 135. The fourth curvature radius may be about 1.0 mm or less, or 0.8 mm or less, 0.6 mm or less, or about 0.5 mm or less.

The pressing edge 213 of the die 21 may correspond to the die edge 138 of the battery case 13. The forming space 211 of the die 21 may correspond to the cup portion 133 of the battery case 13. The pressing edge 213 may be also formed along a periphery of the forming space 211. When the forming space 211 has a quadrangular shape, four pressing edges 213 may be formed.

The first press region 2131 may be formed in each of the pressing edges 213. For example, the first press region 2131 may be formed in two of the pressing edges 213 that are opposite to each other. The first press region 2131 may be positioned at an approximately central portion of the pressing edge 213. The second press region 2132 maybe formed on either side or on both sides of the first press region 2131, without the subject matter being limited thereto. Multiple first press regions 2131 may be formed in one die edge 138, and the second press region 2132 may be formed between and adjacent to each of the first press regions 2131.

The first press region 2131 may be rounded with a curvature radius that is different form the curvature radius of the second press region 2132. As such, a stepped portion may occur between adjacent first and second press regions 2131, 2132, without the subject matter being limited thereto. A connection region connecting between adjacent first and second press regions 2131, 2132 maybe formed so as to prevent such stepped portion. The connection region may also be rounded. The curvature radius of the connection region may change gradually and continuously from the third curvature radius to the fourth curvature radius, as the connection region extends from the first press region 2131 to the second press region 2132. Accordingly, the third region 2131 may be smoothly connected to the fourth region 2132 without the stepped portion.

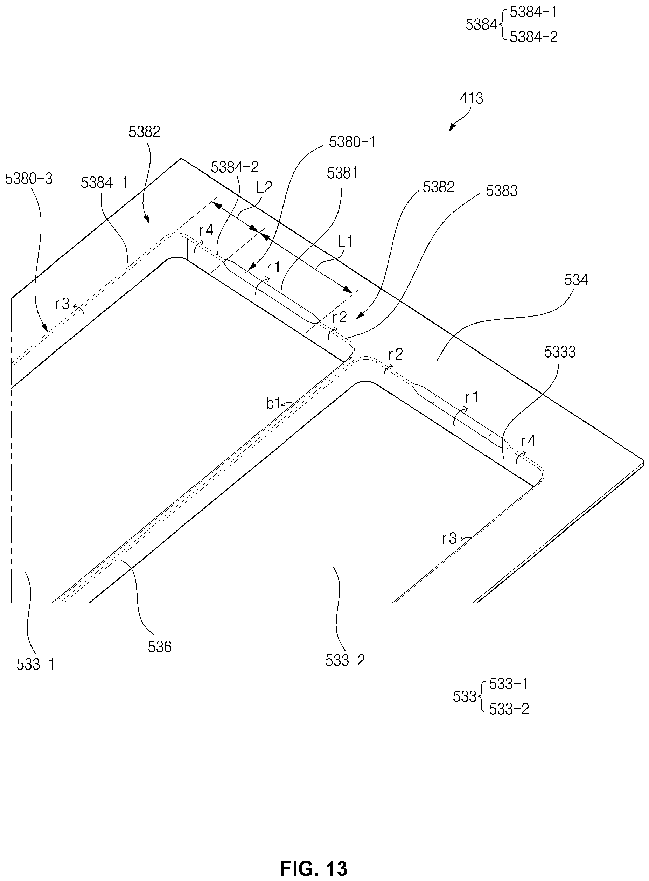

FIG. 13 is a perspective view of a battery case according to another example. Here, like reference signs (except for the first digit) may indicate like features, unless structurally or functionally inappropriate or unless indicated otherwise. In particular, the features described above may apply to the battery case 413 of FIG. 13 accordingly.

As shown in FIG. 13, a battery case 413 may include a cup portion 533 (cup portions 533-1 and 533-2) and multiple die edges.

The cup portion 533 may be configured to accommodate therein an electrode assembly, such as the electrode assembly 10 as described above, which may be formed by stacking an electrode and a separator in any above-described manner. The cup portion 533 may include a first cup portion 533-1 provided in a first case. The cup portigon 533 may comprise a second cup portion 533-2 provided in a second case.

A die edge refers to a part which connects between a sidewall 5333 of the cup portion 533 and a side portion 534 which extends outwards from the sidewall 5333. In the example of FIG. 13, multiple sidewalls 5333 are present in the cup portion 533 and multiple die edges may be provided.

The die edges includes a first region 5381 and a second region 5382. The first region 5381 is a region which is rounded with a first curvature radius r1. An electrode tab extending from the electrode assembly may to be positioned at the first region 5381. The first region 5381 may implement some or all of the features as described above with respect to the first region 1381. A width of the first region is illustrated as L1 in FIG. 13.

The second region 5382 is a region adjacent to the first region 5381 without overlapping. The die edge is divided into the first region 5381 and the second region 5382 that are arranged adjacent to each other. The second region 5382 is a region which is rounded with multiple second curvature radii r2, r3, and r4, which are smaller than the first curvature radius r1.

In the battery case 413 of a specific example, the second region 5382 may be divided into an inner region 5383 and an outer region 5384 with respect to the first region 5381. That is, for example, when the inner region 5383 is on one side (e.g. an inner side proximal to a bridge 536) of the first region 5381, the outer region 5384 may be on the other side (e.g. an outer side distal from the bridge 536) of the first region 5381.

The cup portion 533 may include the first cup portion 533-1 and the second cup portion 533-2 which are formed to accommodate the electrode assembly through folding in any above described manner. A bridge 536 may be formed between the first cup portion 533-1 and the second cup portion 533-2 and connect the first cup portion 533-1 and the second cup portion 533-2. The inner region 5383 may be closer to the bridge 536 than is the outer region 5384 with respect to the first region 5381.

In the battery case 413 according to a further example, the curvature radius r2 in the inner region 5383 may be different from the curvature radii r3 and r4 in the outer region 5384.

When, in comparative examples of battery cases, the curvature radius of a die edge has been determined irrespective of the curvature radius of a bridge 536, and in particular, the same curvature radius was applied to all of an inner region 5383 and an outer region 5384. This leads to an occurrence of wrinkling in a corner portion (particularly, in a corner portion of the die edge) of a pouch-type battery case 413. Also, a whitening phenomenon occurred, and a risk of insulation breakdown in a side folding portion has been present.

In contrast, in the battery case 413 as described above, the curvature radius r2 in the inner region 5383 may be set so as to differ from the curvature radii r3 and r4 in the outer region 5384 depending on the requirements. As such, it is possible to adjust the curvature radius so as to prevent the occurrence of wrinkling in the corner portion of the pouch-type battery case 413. Also, the numerical ranges, which are capable of preventing the whitening phenomenon and removing the risk of insulation breakdown, may be appropriately set in the side folding portion, and thus, the pouch-type secondary battery having very excellent quality may be achieved.

More specifically, in the battery case 413, the first region 5381 may be formed in each of a first die edge 5380-1 and a second die edge which are two die edges facing each other in a direction parallel to a direction in which the bridge 536 extends. In FIG. 13, the first die edge 5380-1 and the first region 5381 formed in the first die edge 5380-1 are illustrated. The second die edge is omitted in FIG. 13 for convenience of illustration. The second die edge is on the opposite side to the first die edge 5380-1, and the first region 5381 may also be formed in the second die edge. The second die edge, which is not shown in FIG. 13, and the first die edge 5380-1, which is shown in FIG. 13, may be mirror images of each other.

In the battery case 413, a curvature radius b1 of the bridge 536 may be equal to the curvature radius r2 of the inner region 5383. Accordingly, a region connecting between the bridge 536 and the inner region 5383 may have the same curvature. This makes possible to prevent the occurrence of wrinkling in the region connecting between the bridge 536 and the inner region 5383, that is, in an inner corner portion of the battery case 413.

Specifically, the curvature radius b1 of the bridge 536 and the curvature radius r2 of the inner region 5383 may be about 0.3 mm to about 0.7 mm, or 0.4 mm to 0.6 mm, or 0.35 mm to 0.55 mm. The curvature radius b1 of the bridge 536 and the curvature radius r2 of the inner region 5383 may have a same or similar value within a range from about 0.3 mm to about 0.7 mm. The curvature radius b1 of the bridge 536 and the curvature radius r2 of the inner region 5383 may be about 0.45 mm to about 0.55 mm, or 0.47 mm to 0.53 mm, or 0.49 mm to 0.51 mm. The curvature radius b1 of the bridge 536 and the curvature radius r2 of the inner region 5383 may have a same value within a range from about 0.45 mm to about 0.55 mm. More specifically, both the curvature radius b1 of the bridge 536 and the curvature radius r2 of the inner region 5383 may be about 0.5 mm.

When the curvature radius of the bridge 536 has a small value within the numerical range as described above, the bridge 536 may be tautly spread while folding the battery case 413. Thus, unnecessary protruding portions may be removed from the exterior of the battery case 413. Accordingly, the energy density may be enhanced.

In the battery case 413, the outer region 5384 may include a main outer region 5384-1 (which may also be referred to as a lateral outer region 5384-1) and a connection outer region 5384-2 (which may also be referred to as a corner outer region 5384-2). The main outer region 5384-1 may be a region on a third die edge 5380-3 (which may also be referred to as a lateral die edge 5380-3) opposite to the bridge 536. The third die edge 5380-3 may be a die edge that connects between the first die edge 5380-1 and the second die edge (not shown in FIG. 13). The main outer region 5384-1 of the outer region 5384 may be a region formed in the third die edge 5380-3. The connection outer region 5384-2 may be a region that connects between the main outer region 5384-1 and the first region 5381. For convenience of understanding, the width of the connection outer region 5384-2 is illustrated as L2 in FIG. 13.

The curvature radius r3 in the main outer region 5384-1 may be equal to the curvature radius r4 in the connection outer region 5384-2. The curvature radius r3 in the main outer region 5384-1 and the curvature radius r4 in the connection outer region 5384-2 each may be about 1 mm or more. The curvature radii r3 and r4 may be equal.

After the battery case 413 is folded about the bridge 536, the side portion 534 connected to the main outer region 5384-1 may be double side folded and come into close contact with the cup portion 533 so as to exhibit a tidy appearance. However, when the curvature radius r3 of the main outer region 5384-1, which is to be double side folded, is less than about 1 mm, a whitening phenomenon may occur. The whitening phenomenon may refer to that a color of the pouch changes to white just before a crack occurs in the pouch. Also, insulation failure may occur. Accordingly, in the battery case 413, the curvature radius r3 of the main outer region 5384-1 may be about 1 mm or more. In this manner, it is possible to prevent said problems such as the whitening phenomenon, the insulation failure, and the like.

The curvature radius r3 of the main outer region 5384-1, which is about 1 mm or more, and the curvature radius r4 of the connection outer region 5384-2 may be set so as to be equal. When these two curvature radii are equal, a region connecting between the main outer region 5384-1 and the connection outer region 5384-2 may have a same curvature. As such, it is possible to prevent the occurrence of wrinkling in the region connecting the main outer region 5384-1 to the connection outer region 5384-2, that is, in an outer corner portion of the battery case 413. In this case, the curvature radii r3 and r4 of the outer region 5384 may be greater than the curvature radius r2 of the inner region 5383.

In the battery case 413, the first region 5381 may be formed so as to have a greater curvature radius than the second region 5382. The curvature radius r1 of the first region 5381 may be greater than any of the curvature radius r2 of the inner region 5383, the curvature radius r3 of the main outer region 5384-1, and the curvature radius r4 of the connection outer region 5384-2.

Specifically, the curvature radius r1 of the first region 5381 may be about 1.5 mm to about 2.5 mm, or 1.7 mm to 2.3 mm, or 1.9 mm to 2.1 mm, or about 2.0 mm. When the curvature radius in the first region 5381 has the value within said numerical range, it is possible to prevent the occurrence of an interaction between the die edge and the electrode tab as described above.

When using the battery case 413 as described above, a secondary battery may be obtained which is capable of preventing the occurrence of wrinkling in the corner portion-. The secondary battery may further be capable of preventing the whitening phenomenon and reducing the risk of insulation breakdown in the side folding portion.

Specifically, a secondary battery using the battery case 413 may include an electrode assembly formed by stacking an electrode and a separator. The battery case 413 including the cup portion 533 may accommodate therein the electrode assembly disclosed herein. The battery case 413 may include die edges that connect between the sidewall 5333 of the cup portion 533 and the side portion 534 which extends outwards from the sidewall 5333. The die edges may include the first region 5381 and the second region 5382 as described above.

The first region 5381 may be a region which is rounded with the first curvature radius r1. The electrode tab extending from the electrode may be arranged in (or on) the first region 5381. In other words, the first region 5381 may be configured to receive the electrode tab. The second region 5382 may be a region adjacent to the first region 5381. The second region 5382 may be rounded with a single curvature radius or with multiple second curvature radii r2, r3, and r4, which may be equal to or smaller than the first curvature radius r1.

The second region 5382 may be divided into the inner region 5383 and the outer region 5384 by the first region 5381. The curvature radius r2 of the inner region 5383 may be different from the curvature radii r3 and r4 of the outer region 5384.

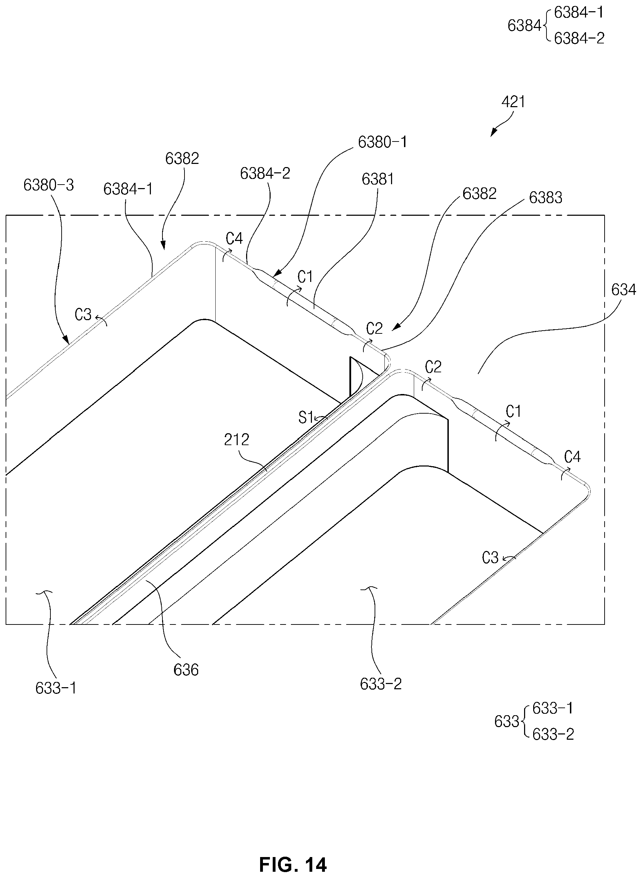

FIG. 14 is a perspective view of a forming apparatus for manufacturing a battery case according to another . Here, like reference signs (except for the first digit) may indicate like features, unless structurally or functionally inappropriate or unless indicated otherwise. In particular, the features described above may apply to the die 421 of FIG. 14 accordingly.

The battery case forming apparatus may include a die and punch (refer to FIG. 11 for the structures and principles of the die and punch). Referring to FIG. 14, a die 421 may have a top surface 634, on which a pouch film, such as the pouch film 135 as described above, may be placed, and include at least one forming space 633 recessed from the top surface 634. The punch may be disposed above the forming space 633, and configured (operable) to descend so as to insert the pouch film into the forming space 633, thereby forming the pouch-type battery case.

Only the die 421 is illustrated in FIG. 14. A punch is omitted for the simplicity of illustration. Referring to FIG. 14, in the battery case forming apparatus for manufacturing the battery case 413, the die 421 may include pressing edges that connect between the forming space 633 and the top surface 634. Also, the pressing edges may include a first press region 6381 (a third region 6381) and a second press region 6382 (a fourth region 6382).

The first press region 6381 may be a region which is rounded with a third curvature radius C1 The first press region 6381 may be used to form the first region 5381 as described above. The second press region 6382 may be a region adjacent to the first press region 6381 (without overlapping with the first press region 6381) and may be rounded with a single fourth curvature radius or multiple fourth curvature radii C2, C3, and C4, which is smaller than the third curvature radius C1. The second press region 6382 may be used to form the second region 5382 as described above.

Here, the second press region 6382 may be divided into a die inner region 6383 and a die outer region 6384 by the first press region 6381. For example, when the die inner region 6383 is on one side (e.g. an inner side proximal to the partition wall 212) of the third region 6381, the die outer region 6384 may be on the other side (e.g. an outer side distal from the partition wall 212) of the third region 6381.

The curvature radius C2 of the die inner region 6383 may be different from the curvature radii C3 and C4 of the die outer region 6384. Due to the difference between the curvature radius C2 of the die inner region 6383 and the curvature radii C3 and C4 of the die outer region 6384, the curvature radius r2 of the inner region of the battery case may be different from the curvature radii r3 and r4 of the outer region of the battery case in the above-described manner.

More specifically, the curvature radii C3 and C4 of the die outer region 6384 may be greater than the curvature radius C2 of the die inner region 6383. Accordingly, the curvature radii r3 and r4 of the outer region of the battery case may be greater than the curvature radius r2 of the inner region of the battery case.

This is because the curvature radius r2 of the inner region of the battery case may be formed as the curvature radius corresponding to the curvature radius C2 of the die inner region 6383, and the curvature radii r3 and r4 of the outer region of the battery case may be formed as the curvature radii corresponding to the curvature radii C3 and C4 of the die outer region 6384.

The forming space 633 of the die 421 may include a first forming space 633-1 and a second forming space 633-2 to form the cup portion. The first forming space 633-1 may form the first cup portion 533-1, and the second forming space 633-2 may form the second cup portion 533-2. Also, a die bridge 636 may be formed between the first forming space 633-1 and the second forming space 633-2 to connect the first forming space 633-1 to the second forming space 633-2. Here, the die bridge 636 may form the bridge 536 of the battery case. With respect to the third region 6381, the die inner region 6383 may be closer to the die bridge 636 than is the die outer region 6384.

The third region 6381 may be formed in each of a first pressing edge 6380-1 and a second pressing edge which are two pressing edges opposite to each other in a direction parallel to a direction in which the die bridge 636 extends. FIG. 14 illustrates the first pressing edge 6380-1 and the third region 6381 formed in the first pressing edge 6380-1. The second pressing edge is omitted in FIG. 14 for the simplicity of illustration. The second pressing edge may be on the opposite side to the first pressing edge 6380-1, and the first press region 5381 may also be formed in the second pressing edge. That is, the second pressing edge, which is not shown in FIG. 14, and the first pressing edge 6380-1, which is shown in FIG. 14, may be mirror images of each other.

A curvature radius S1 of the die bridge 636 and the curvature radius C2 of the die inner region 6383 may be equal. Accordingly, a region connecting between the die bridge 636 and the die inner region 6383 may have a same curvature. Accordingly, in the battery case formed by the die, it may be possible to prevent the occurrence of wrinkling in the corner region of the battery case connecting between the bridge 536 and the inner region 5383.

The curvature radius S1 of the die bridge 636 and the curvature radius C2 of the die inner region 6383 may be about 0.3 mm to about 0.7 mm, or 0.4 mm to 0.6 mm, or about 0.5 mm. The curvature radius S1 of the die bridge 636 and the curvature radius C2 of the die inner region 6383 may have a same value within a range from about 0.3 mm to about 0.7 mm. Also, the curvature radius S1 of the die bridge 636 and the curvature radius C2 of the die inner region 6383 may be about 0.45 mm to about 0.55 mm. That is, in this case, the curvature radius S1 of the bridge 636 and the curvature radius C2 of the die inner region 6383 may have a same value within a range from about 0.45 mm to about 0.55 mm. More specifically, the curvature radius S1 of the die bridge 636 and the curvature radius C2 of the die inner region 6383 may be both about 0.5 mm.

When the curvature radius of the die bridge 636 has a small value within the numerical range described above, the bridge 536 of the battery case may also have a small curvature, and accordingly, the bridge 536 may be tautly spread. Thus, unnecessary protruding portions may be removed from the exterior of the battery case, and accordingly, the energy density may also be enhanced.

The die outer region 6384 may include a main die outer region 6384-1 and a connection die outer region 6384-2. The main die outer region 6384-1 may be a region on a third pressing edge 6380-3 facing the die bridge 636. Here, the third pressing edge 6380-3 may be a pressing edge that connects the first pressing edge 6380-1 to the second pressing edge.

The main die outer region 6384-1 of the die outer region 6384 may be a region formed in the third pressing edge 6380-3. Also, the connection die outer region 6384-2 may be a region that connects the main die outer region 6384-1 to the third region 6381.

The curvature radius C3 of the main die outer region 6384-1 may be equal to the curvature radius C4 of the connection die outer region 6384-2. The curvature radius C3 of the main die outer region 6384-1 and the curvature radius C4 of the connection die outer region 6384-2 may be each about 1 mm or more and may be equal.

Accordingly, the curvature radius r3 of the main outer region 5384-1 and the curvature radius r4 of the connection outer region 5384-2 may be each about 1 mm or more. When the curvature radius r3 of the main outer region is about 1 mm or more in the battery case, it is possible to prevent the whitening phenomenon, the insulation failure, or the like.

Also, as the curvature radius C3 of the main die outer region 6384-1 and the curvature radius C4 of the connection die outer region 6384-2 are equal, the curvature radius r3 of the main outer region 5384-1 and the curvature radius r4 of the connection outer region 5384-2 may be equal. When these two curvature radii are equal, it is possible to prevent the occurrence of wrinkling in the region connecting between the main outer region 5384-1 and the connection outer region 5384-2, that is, in the outer corner portion of the battery case 413.

As described above, the forming apparatus for manufacturing the battery case may manufacture the battery case which may prevent the occurrence of wrinkling in the corner portion of the battery case and reduce the whitening phenomenon and the risk of insulation breakdown in the side folding portion.

The third region 6381 may be formed to have a greater curvature radius than the second press region 6382. That is, the curvature radius C1 of the first press region 6381 is greater than any of the curvature radius C2 of the die inner region 6383, the curvature radius C3 of the main die outer region 6384-1, and the curvature radius C4 of the connection die outer region 6384-2.

The curvature radius C1 of the first press region 6381 may be about 1.5 mm to about 2.5 mm, or 1.7 mm to 2.3 mm, or 1.9 mm to 2.1 mm, or about 2.0 mm. When the curvature radius of the third region 6381 has the value within the numerical range described above, the first region 5381 of the battery case 413 may be formed so as to have a corresponding shape and corresponding dimensions. Accordingly, it is possible to prevent the occurrence of an interaction between the die edge and the electrode tab as described above.

The embodiments of the present invention may have at least the following effects.

The first region of the die edges, on which the electrode tab is placed, is rounded at the relatively large first curvature radius , and the second region, on which the electrode tab is not placed, is rounded at the relatively small second curvature radius . Thus, the occurrence of interference between the die edge and the electrode tab may be prevented, even if the sidewall of the cup portion becomes almost vertical and the curvature radius of the die edge of the cup portion is reduced.

Also, the occurrence of wrinkling in the corner portion of the pouch-type battery case may be prevented. In the side folding portion, the whitening phenomenon may be eliminated, and the risk of insulation breakdown may be reduced.

The effects according to the present invention are not limited to those exemplified above, and more various effects are included in the present specification.

Those with ordinary skill in the technical field to which the present invention pertains will understand that the present invention may be implemented in other specific forms without changing the technical idea or essential features. Therefore, the above-described embodiments are to be considered illustrative and not restrictive to all aspects. The scope of the present invention is defined by the appended claims .

## Claims

1. A pouch-type battery case (13) comprising:
a cup portion (133; 533) configured to accommodate therein an electrode assembly (10); and
die edges (138; 5380) connecting between a sidewall (1333; 5333) of the cup portion (133; 533) to a side portion (134; 534), the side portion (134; 534) extending from the sidewall (1333; 5333),
wherein the die edges (138; 5380) comprise:
- a first region (1381; 5381) which is rounded with a first curvature radius (r1), wherein an electrode tab (11) extends from the electrode assembly (10) is to be arranged in the first region (1381; 5381); and
- a second region (1382; 5382) which is adjacent to the first region (1381; 5381) and rounded with more second curvature radii (r2, r3, r4), wherein the second curvature radii (r2, r3, r4) are smaller than the first curvature radius (r1),
wherein the second region (1382; 5382) is divided into an inner region (5383) and an outer region (5384) by the first region (1381; 5381),
wherein the curvature radius (r2) of the inner region (5383) is different from the curvature radii (r3, r4) of the outer region (5384).

2. The pouch-type battery case of claim 1,
wherein the cup portion (133; 533) comprises a first cup portion (533-1) and a second cup portion (533-2) which are configured to accommodate the electrode assembly (10) therebetween after folding,
wherein a bridge (136; 536) is formed between the first cup portion (533-1) and the second cup portion (533-2) and connects between the first cup portion (533-1) and the second cup portion (533-2),
wherein the first region (1381; 5381) is formed in each of a first die edge (5380-1) and a second die edge which are two die edges opposite to each other in a direction parallel to a direction in which the bridge (136; 536) extends.

3. The pouch-type battery case of claim 1 or 2, wherein a distance between the inner region (5383) and the bridge (136; 536) is smaller than a distance between the outer region (5384) and the bridge (136; 536).

4. The pouch-type battery case of any of the preceding claims, wherein the curvature radii (r3, r4) of the outer region (5384) are greater than the curvature radius (r2) of the inner region (5383).

5. The pouch-type battery case of any of claims 2 to 4, wherein the bridge (136; 536) is rounded with a curvature radius (b1), wherein the curvature radius (b1) of the bridge (136; 536) is equal to the curvature radius (r2) in the inner region (5383).

6. The pouch-type battery case of any of claims 2 to 5, wherein each of the curvature radius (b1) of the bridge (136; 536) and the curvature radius (r2) of the inner region (5383) is 0.3 mm to 0.7 mm, or 0.45 mm to 0.55 mm.

7. The pouch-type battery case of any of the preceding claims,
wherein the outer region (5384) comprises a main outer region (5384-1) which is a region on a third die edge (5380-3) opposite to the bridge (136; 536) and a connection outer region (5384-2) which connects between the main outer region (5384-1) and the first region (1381; 5381),
wherein the curvature radius (r3) of the main outer region (5384-1) is equal to the curvature radius (r4) of the connection outer region (5384-2).

8. The pouch-type battery case of claim 7,
wherein each of the curvature radius (r3) of the main outer region (5384-1) and the curvature radius (r4) of the connection outer region (5384-2) is about 1 mm or more,
wherein the curvature radius (ri) of the first region (1381; 5381) is about 1.5 mm to about 2.5 mm.

9. A battery case forming apparatus for manufacturing the pouch-type battery case of any of the preceding claims, the battery case forming apparatus comprising:
a die (21; 421) which has a top surface (634), on which a pouch film (135) is to be placed, and comprises at least one forming space (211; 633) recessed from the top surface (634); and
a punch (22) which is disposed above the forming space (211; 633) and operable to descend so as to insert the pouch film (135), that is placed on the top surface (634), into the forming space (211; 633),
wherein the die (21; 421) comprises pressing edges (213; 6380) configured to connect the forming space (211; 633) to the top surface (634),
wherein the plurality of pressing edges (213; 6380) comprise:
- a first press region (6381) which is rounded with a third curvature radius (C1) and used to form the first region (1381; 5381); and
- a second press region (6382) which is adjacent to the first press region (6381) and rounded with more fourth curvature radii (C2, C₃, C₄), wherein the more fourth curvature radii (C₂, C₃, C₄) are smaller than the third curvature radius,
wherein the second press region (6382) is divided into a die inner region (6383) and a die outer region (6384) by the first press region (6381),
wherein the curvature radius (C2) in the die inner region (6383) is different from the curvature radii (C3, C4)of the die outer region (6384).

10. The battery case forming apparatus of claim 9,
wherein the forming space (211; 633) comprises a first forming space (633-1) and a second forming space (633-2) to form the cup portion (133; 533) of the pouch film (135),
wherein a die bridge (636) is formed between the first forming space (633-1) and the second forming space (633-2) and connect between the first forming space (633-1) to the second forming space (633-2).

11. The battery case forming apparatus of claim 9 or 10, wherein the first press region (6381) is formed in each of a first pressing edge (6380-1) and a second pressing edge which are two pressing edges opposite to each other in a direction parallel to a direction in which the die bridge (636) extends.

12. The battery case forming apparatus of any of claims 9 to 11, wherein a distance between the die inner region (6383) and the die bridge (636) is smaller than a distance between the die outer region (6384) and the bridge (636).

13. The battery case forming apparatus of any of claims 9 to 12, wherein the curvature radii (C3, C4) of the die outer region (6384) are each greater than the curvature radius (C2) of the die inner region (6383).

14. The battery case forming apparatus of claim 12, wherein the die bridge (636) is curved with a curvature radius (S1), wherein the curvature radius (S1) of the die bridge (636) is equal to the curvature radius (C2) of the die inner region (6383).

15. The battery case forming apparatus of claim 14, wherein each of the curvature radius (S1) of the die bridge (636) and the curvature radius (C2) of the die inner region (6383) is 0.3 mm to 0.7 mm, or 0.45 mm to 0.55 mm.

16. The battery case forming apparatus of any of claims 9 to 15,
wherein the die outer region (6384) comprises a main die outer region (6384-1) which is a region on a third pressing edge (6380-3) opposite to the die bridge (636) and a connection die outer region (6384-2) which connects the main die outer region (6384-1) to the first press region (6381),
wherein the curvature radius (C3) of the main die outer region (6384-1) is equal to the curvature radius (C4) of the connection die outer region (6384-2).

17. The battery case forming apparatus of claim 16,
wherein each of the curvature radius (C3) of the main die outer region (6384-1) and the curvature radius (C4) of the connection die outer region (6384-2) is about 1 mm or more, and
wherein the curvature radius (C1) of the first press region (6381) is about 1.5 mm to about 2.5 mm.

18. A pouch-type secondary battery (1) comprising:
an electrode assembly (10) formed by stacking an electrode and a separator; and
a battery case (13) comprising a cup portion (133; 533) configured to accommodate therein the electrode assembly (10),
wherein the battery case (13) comprises die edges (138; 5380) configured to connect a sidewall (1331; 5333) of the cup portion (133; 533) to a side portion (134; 534) extending from the sidewall (1331; 5333),
wherein the die edges (138; 5380) comprise:
- a first region (1381; 5381) which is rounded with a first curvature radius (r1) , wherein an electrode tab (11) extends from the electrode assembly (10) is positioned in the first region (1381; 5381); and
- a second region (1382; 5382) which is adjacent to the first region (1381; 5381) and rounded with more second curvature radii (r2, r3, r4), wherein the second curvature radii (r2, r3, r4) are each smaller than the first curvature radius (n),
wherein the second region (1382; 5382) is divided into an inner region (5383) and an outer region (5384) by the first region (1381; 5381), and
the curvature radius (r2) of the inner region (5383) is different from the curvature radii (r3, r4) of the outer region (5384).

## Patentansprüche

1. Pouch-Batterie-Gehäuse (13), umfassend:
einen Becherabschnitt (133; 533), der dazu ausgelegt ist, um darin eine Elektrodenbaugruppe (10) aufzunehmen; und
Die-Kanten (138; 5380), die eine Seitenwand (1333; 5333) des Becherabschnitts (133; 533) mit einem Seitenabschnitt (134; 534) verbinden, wobei sich der Seitenabschnitt (134; 534) von der Seitenwand (1333; 5333) erstreckt,
wobei die Die-Kanten (138; 5380) umfassen:
- einen ersten Bereich (1381; 5381), der mit einem ersten Krümmungsradius (ri) abgerundet ist, wobei sich eine Elektrodenlasche (11) von der Elektrodenbaugruppe (10) erstreckt, die in dem ersten Bereich (1381; 5381) anzuordnen ist; und
- einen zweiten Bereich (1382; 5382), der an den ersten Bereich (1381; 5381) angrenzt und mit mehreren zweiten Krümmungsradien (r2, r3, r4) abgerundet ist, wobei die zweiten Krümmungsradien (r2, r3, r4) kleiner als der erste Krümmungsradius (ri) sind,
wobei der zweite Bereich (1382; 5382) durch den ersten Bereich (1381; 5381) in einen inneren Bereich (5383) und einen äußeren Bereich (5384) unterteilt ist,
wobei sich der Krümmungsradius (r2) des inneren Bereichs (5383) von den Krümmungsradien (r3, r4) des äußeren Bereichs (5384) unterscheidet.

2. Pouch-Batterie-Gehäuse nach Anspruch 1,
wobei der Becherabschnitt (133; 533) einen ersten Becherabschnitt (533-1) und einen zweiten Becherabschnitt (533-2) umfasst, die zum Aufnehmen der Elektrodenbaugruppe (10) dazwischen nach dem Falten ausgelegt sid,
wobei eine Brücke (136; 536) zwischen dem ersten Becherabschnitt (533-1) und dem zweiten Becherabschnitt (533-2) ausgebildet ist und den ersten Becherabschnitt (533-1) und den zweiten Becherabschnitt (533-2) verbindet,
wobei der erste Bereich (1381; 5381) in jeder einer ersten Die-Kante (5380-1) und einer zweiten Die-Kante ausgebildet ist, die zwei einander in einer Richtung parallel zu einer Richtung, in der sich die Brücke (136; 536) erstreckt, gegenüberliegende Die-Kanten sind.

3. Pouch-Batterie-Gehäuse nach Anspruch 1 oder 2, wobei ein Abstand zwischen dem inneren Bereich (5383) und der Brücke (136; 536) kleiner als ein Abstand zwischen dem äußeren Bereich (5384) und der Brücke (136; 536) ist.

4. Pouch-Batterie-Gehäuse nach einem der vorangehenden Ansprüche, wobei die Krümmungsradien (r3, r4) des äußeren Bereichs (5384) größer als der Krümmungsradius (r2) des inneren Bereichs (5383) sind.

5. Pouch-Batterie-Gehäuse nach einem der Ansprüche 2 bis 4, wobei die Brücke (136; 536) mit einem Krümmungsradius (b1) abgerundet ist, wobei der Krümmungsradius (b1) der Brücke (136; 536) gleich dem Krümmungsradius (r2) im inneren Bereich (5383) ist.

6. Pouch-Batterie-Gehäuse nach einem der Ansprüche 2 bis 5, wobei sowohl der Krümmungsradius (b1) der Brücke (136; 536) als auch der Krümmungsradius (r2) des inneren Bereichs (5383) 0,3 mm bis 0,7 mm oder 0,45 mm bis 0,55 mm beträgt.

7. Pouch-Batterie-Gehäuse nach einem der vorangehenden Ansprüche,
wobei der äußere Bereich (5384) einen äußeren Hauptbereich (5384-1), der ein Bereich an einer dritten Die-Kante (5380-3) gegenüber der Brücke (136; 536) ist, und einen äußeren Verbindungsbereich (5384-2), der den äußeren Hauptbereich (5384-1) und den ersten Bereich (1381; 5381) verbindet, umfasst,
wobei der Krümmungsradius (r3) des äußeren Hauptbereichs (5384-1) gleich dem Krümmungsradius (r4) des äußeren Verbindungsbereichs (5384-2) ist.

8. Pouch-Batterie-Gehäuse nach Anspruch 7,
wobei sowohl der Krümmungsradius (r3) des äußeren Hauptbereichs (5384-1) als auch der Krümmungsradius (r4) des äußeren Verbindungsbereichs (5384-2) etwa 1 mm oder mehr beträgt,
wobei der Krümmungsradius (ri) des ersten Bereichs (1381; 5381) etwa 1,5 mm bis etwa 2,5 mm beträgt.

9. Batteriegehäuse-Formvorrichtung zum Herstellen des Pouch-Batterie-Gehäuses nach einem der vorangehenden Ansprüche, wobei die Batteriegehäuse-Formvorrichtung umfasst:
ein Die (21; 421), der eine obere Oberfläche (634) aufweist, auf der eine Pouch-Folie (135) zu platzieren ist, und mindestens einen Formraum (211; 633) umfasst, der von der oberen Oberfläche (634) zurückgesetzt ist; und
einen Stempel (22), der über dem Formraum (211; 633) angeordnet ist und derart absenkbar ist, dass die Pouch-Folie (135), die auf der oberen Oberfläche (634) platziert ist, in den Formraum (211; 633) eingeführt wird,
wobei der Die (21; 421) Presskanten (213; 6380) umfasst, die dazu ausgelegt sind, den Formraum (211; 633) mit der oberen Oberfläche (634) zu verbinden,
wobei die mehreren Presskanten (213; 6380) umfassen:
- einen ersten Pressbereich (6381), der mit einem dritten Krümmungsradius (C1) abgerundet ist und zum Formen des ersten Bereichs (1381; 5381) verwendet wird; und
- einen zweiten Pressbereich (6382), der zum ersten Pressbereich (6381) benachbart ist und mit mehreren vierten Krümmungsradien (C2, C3, C4) abgerundet ist, wobei die mehreren vierten Krümmungsradien (C2, C3, C4) kleiner als der dritte Krümmungsradius sind,
wobei der zweite Pressbereich (6382) durch den ersten Pressbereich (6381) in einen inneren Die-Bereich (6383) und einen äußeren Die-Bereich (6384) unterteilt ist,
wobei sich der Krümmungsradius (C2) im inneren Die-Bereich (6383) von den Krümmungsradien (C3, C4) des äußeren Die-Bereichs (6384) unterscheidet.

10. Batteriegehäuse-Formvorrichtung nach Anspruch 9,
wobei der Formraum (211; 633) einen ersten Formraum (633-1) und einen zweiten Formraum (633-2) zum Formen des Becherabschnitts (133; 533) der Pouch-Folie (135) umfasst,
wobei eine Die-Brücke (636) zwischen dem ersten Formraum (633-1) und dem zweiten Formraum (633-2) ausgebildet ist und den ersten Formraum (633-1) mit dem zweiten Formraum (633-2) verbindet.

11. Batteriegehäuse-Formvorrichtung nach Anspruch 9 oder 10, wobei der erste Pressbereich (6381) in jeder einer ersten Presskante (6380-1) und einer zweiten Presskante ausgebildet ist, die zwei einander in einer Richtung parallel zu einer Richtung, in der sich die Die-Brücke (636) erstreckt, gegenüberliegende Presskanten sind.

12. Batteriegehäuse-Formvorrichtung nach einem der Ansprüche 9 bis 11, wobei ein Abstand zwischen dem inneren Bereich (6383) und der Die-Brücke (636) kleiner als ein Abstand zwischen dem äußeren Bereich (6384) und der Brücke (636) ist.

13. Batteriegehäuse-Formvorrichtung nach einem der Ansprüche 9 bis 12, wobei die Krümmungsradien (C3, C4) des äußeren Die-Bereichs (6384) jeweils größer als der Krümmungsradius (C2) des inneren Die-Bereichs (6383) sind.

14. Batteriegehäuse-Formvorrichtung nach Anspruch 12, wobei die Die-Brücke (636) mit einem Krümmungsradius (S1) gekrümmt ist, wobei der Krümmungsradius (S1) der Die-Brücke (636) gleich dem Krümmungsradius (C2) des inneren Die-Bereichs (6383) ist.

15. Batteriegehäuse-Formvorrichtung nach Anspruch 14, wobei sowohl der Krümmungsradius (S1) der Die-Brücke (636) als auch der Krümmungsradius (C2) des inneren Die-Bereichs (6383) 0,3 mm bis 0,7 mm oder 0,45 mm bis 0,55 mm beträgt.

16. Batteriegehäuse-Formvorrichtung nach einem der Ansprüche 9 bis 15,
wobei der äußere Die-Bereich (6384) einen äußeren Die-Hauptbereich (6384-1), der ein Bereich an einer dritten Presskante (6380-3) gegenüber der Die-Brücke (636) ist, und einen äußeren Die-Verbindungsbereich (6384-2), der den äußeren Die-Hauptbereich (6384-1) mit dem ersten Pressbereich (6381) verbindet, umfasst,
wobei der Krümmungsradius (C3) des äußeren Die-Hauptbereichs (6384-1) gleich dem Krümmungsradius (C4) des äußeren Die-Verbindungsbereichs (6384-2) ist.

17. Batteriegehäuse-Formvorrichtung nach Anspruch 16,
wobei sowohl der Krümmungsradius (C3) des äußeren Die-Hauptbereichs (6384-1) als auch der Krümmungsradius (C4) des äußeren Die-Verbindungsbereichs (6384-2) etwa 1 mm oder mehr beträgt, und
wobei der Krümmungsradius (C1) des ersten Pressbereichs (6381) etwa 1,5 mm bis etwa 2,5 mm beträgt.

18. Pouch-Sekundärbatterie (1), umfassend:
eine Elektrodenbaugruppe (10), die durch Stapeln einer Elektrode und eines Separators gebildet ist; und
ein Batteriegehäuse (13), das einen Becherabschnitt (133; 533) umfasst, der dazu ausgelegt ist, die Elektrodenbaugruppe (10) darin aufzunehmen,
wobei das Batteriegehäuse (13) Die-Kanten (138; 5380) umfasst, die dazu ausgelegt sind, eine Seitenwand (1331; 5333) des Becherabschnitts (133; 533) mit einem Seitenabschnitt (134; 534) zu verbinden, der sich von der Seitenwand (1331; 5333) erstreckt,
wobei die Die-Kanten (138; 5380) umfassen:
- einen ersten Bereich (1381; 5381), der mit einem ersten Krümmungsradius (ri) abgerundet ist, wobei sich eine Elektrodenlasche (11) von der Elektrodenbaugruppe (10) erstreckt, die in dem ersten Bereich (1381; 5381) angeordnet ist; und
- einen zweiten Bereich (1382; 5382), der an den ersten Bereich (1381; 5381) angrenzt und mit mehreren zweiten Krümmungsradien (r2, r3, r4) abgerundet ist, wobei die zweiten Krümmungsradien (r2, r3, r4) jeweils kleiner als der erste Krümmungsradius (ri) sind,
wobei der zweite Bereich (1382; 5382) durch den ersten Bereich (1381; 5381) in einen inneren Bereich (5383) und einen äußeren Bereich (5384) unterteilt ist, und
sich der Krümmungsradius (r2) des inneren Bereichs (5383) von den Krümmungsradien (r3, r4) des äußeren Bereichs (5384) unterscheidet.

## Revendications

1. Un boîtier pour piles du type à pochette (13) composé des éléments suivants :
une portion à coupelle (133, 533) configurée pour recevoir un ensemble électrode (10) et
des rebords matricés (138; 5380) qui assurent un raccordement entre une paroi latérale (1333, 5333) de la portion à coupelle (133, 533) et une portion latérale (134, 534), et cette portion latérale (134, 534) part de la paroi latérale (1333, 5333),
et les rebords matricés (138, 5380) comportent :
- une première région (1381, 5381) qui est arrondie par un premier rayon de cintrage (r1) , et une languette d'électrode (11) part de l'ensemble électrode (10) et vient s'implanter dans la première région (1381,5381), et
- une deuxième région (1382, 5382) qui est adjacente à la première région (1381, 5381) et est arrondie par plusieurs deuxièmes rayons de cintrage (r2, r3, r4), et ces deuxièmes rayons de cintrage (r2, r3, r4) sont plus petits que le premier rayon de cintrage (r1),
et cette deuxième région (1382, 5382) est divisée en une région interne (5383) et une région externe (5384) par la première région (1381, 5381),
et le rayon de cintrage (r2) de la région interne (5383) est différent des rayons de cintrage (r3, r4) de la région externe (5384).

2. Le boîtier pour piles du type à pochette que décrit la revendication 1,
si ce n'est que la portion à coupelle (133; 533) comporte une première portion à coupelle (533-1) et une deuxième portion à coupelle (533-2) qui sont configurées pour recevoir l'ensemble électrode (10) dans l'entre deux, après repliage,
si ce n'est qu'un pontet (136, 536) vient se former entre la première portion à coupelle (533-1) et la deuxième portion à coupelle (533-2) et qu'une connexion s'établit entre la première portion à coupelle (533-1) et la deuxième portion à coupelle (533-2),
si ce n'est que la première région (1381, 5381) vient se former dans un premier rebord matricé (5380-1) et un deuxième rebord matricé qui sont deux rebords matricés opposés l'un à l'autre dans un sens parallèle au sens de déploiement du pontet (136, 536).

3. Le boîtier pour piles du type à pochette que décrit la revendication 1 ou 2, si ce n'est que la distance entre la région interne (5383) et le pontet (136, 536) est inférieure à la distance entre la région externe (5384) et le pontet (136, 536).

4. Le boîtier pour piles du type à pochette que décrit l'une ou l'autre des revendications précédentes, si ce n'est que les rayons de cintrage (r3, r4) de la région externe (5384) sont plus grands que le rayon de cintrage (r2) de la région interne (5383).

5. Le boîtier pour piles du type à pochette que décrit l'une ou l'autre des revendications 2 à 4, si ce n'est que le pontet (136, 536) est arrondi par un rayon de cintrage (b1), et que ce rayon de cintrage (b1) du pontet (136, 536) est égal au rayon de cintrage (r2) de la région interne (5383).

6. Le boîtier pour piles du type à pochette que décrit l'une ou l'autre des revendications 2 à 5, si ce n'est que le rayon de cintrage (b1) du pontet (136; 536) et le rayon de cintrage (r2) de la région interne (5383) sont égaux à 0,3 à 0,7 mm, ou à 0,45 à 0,55 mm.

7. Le boîtier pour piles du type à pochette que décrit l'une ou l'autre des revendications précédentes,
si ce n'est que la région externe (5384) comporte une région externe principale (5384-1) qui est une région implantée sur un troisième rebord matricé (5380-3) face au pontet (136, 536) et une région externe de raccordement (5384-2) qui raccorde la région externe principale (5384-1) à la première région (1381, 5381),
et que le rayon de cintrage (r3) de la principale région externe (5384-1) est égal au rayon de cintrage (r4) de la région externe de raccordement (5384-2).

8. Le boîtier pour piles du type à pochette que décrit la revendication 7,
si ce n'est que le rayon de cintrage (r3) de la principale région externe (5384-1) et le rayon de cintrage (r4) de la région externe de raccordement (5384-2) sont égaux à au moins 1 mm environ,
et que le rayon de cintrage (r1) de la première région (1381; 5381) se situe, approximativement, entre 1,5 et 2,5 mm.

9. Un appareil de formation d'un boîtier pour piles qui est conçu pour fabriquer le boîtier pour piles du type à pochette que décrit l'une ou l'autre des revendications précédentes, et cet appareil de formation d'un boîtier pour piles se compose des éléments suivants :
une matrice (21,421) qui a une surface supérieure (634), sur laquelle doit venir se placer un film de pochette (135), et qui comporte au moins un espace de formation (211, 633) qui se situe dans un creux par rapport à la surface supérieure (634), et
un poinçon (22) qui est implanté au-dessus de l'espace de formation (211, 633) et qui fonctionne en descendant de manière à introduire le film de pochette (135), qui est placé sur la surface supérieure (634), dans l'espace de formation (211, 633),
si ce n'est que la matrice (21,421) comporte des bords de mise sous pression (213, 6380) qui sont configurées pour raccorder l'espace de formation (211, 633) à la surface supérieure (634),
et que la pluralité de bords de mise sous pression (213, 6380) comporte :
- une première région de mise sous pression (6381) qui est arrondie par rapport à un troisième rayon de cintrage (C1) et qui s'utilise pour former la première région (1381, 5381), et
- une deuxième région de mise sous pression (6382) qui est adjacente à la première région de mise sous pression (6381) et qui est arrondie par rapport à plusieurs autres quatrièmes rayons de cintrage (C2, C3, C4), et ces plusieurs autres quatrièmes rayons de cintrage (C2, C3, C4) sont plus petits que le troisième rayon de cintrage,
et que cette deuxième région (6382) est divisée en une région interne matricée (6383) et une région externe matricée (6384) par la première région de mise sous pression (6381),
et que le rayon de cintrage (C2) de la région interne matricée (6383) est différent des rayons de cintrage (C3, C4) de la région externe matricée (6384).

10. L'appareil de formation d'un boîtier pour piles que décrit la revendication 9,
si ce n'est que l'espace de formation (211; 633) comporte un premier espace de formation (633-1) et un deuxième espace de formation (633-2) afin de former la partie à coupelle (133, 533) du film de pochette (135),
si ce n'est qu'un pontet de matrice (636) vient se former entre le premier espace de formation (633-1) et le deuxième espace de formation (633-2) et qu'une connexion s'établit entre le premier espace de formation (633-1) et le deuxième espace de formation (633-2).

11. L'appareil de formation d'un boîtier pour piles que décrit la revendication 9 ou 10, si ce n'est que la première région de mise sous pression (6381) vient se former dans un premier rebord de mise sous pression (6380-1) et un deuxième rebord de mise sous pression qui sont deux rebords de mise sous pression opposés l'un à l'autre dans un sens parallèle au sens de déploiement du pontet de matrice (636).

12. L'appareil de formation d'un boîtier pour piles que décrit l'une ou l'autre des revendications 9 à 11, si ce n'est que la distance entre la région matricée interne (6383) et le pontet de matrice (636) est inférieure à la distance entre la région matricée externe (6384) et le pontet (636).

13. L'appareil de formation d'un boîtier pour piles que décrit l'une ou l'autre des revendications 9 à 12, si ce n'est que les rayons de cintrage (C3, C4) de la région matricée externe (6384) sont plus grands que le rayon de cintrage (C2) de la région matricée interne (6383).

14. L'appareil de formation d'un boîtier pour piles que décrit la revendication 12, si ce n'est que le pontet de matrice (636) est incurvé par rapport à un rayon de cintrage (S1), et que ce rayon de cintrage (S1) du pontet de matrice (636) est égal au rayon de cintrage (C2) de la région interne matricée (6383).

15. L'appareil de formation d'un boîtier pour piles que décrit la revendication 14, si ce n'est que le rayon de cintrage (S1) du pontet de matrice (636) et le rayon de cintrage (C2) de la région matricée interne (6383) sont égaux à 0,3 à 0,7 mm, ou à 0,45 à 0,55 mm.

16. L'appareil de formation d'un boîtier pour piles que décrit l'une ou l'autre des revendications 9 à 15,
si ce n'est que la région externe matricée (6384) comporte une région externe matricée principale (6384-1) qui est une région implantée sur un troisième rebord de mise sous pression (6380-3) face au pontet de matrice (636) et une région matricée externe de raccordement (6384-2) qui raccorde la région externe matricée principale (6384-1) à la première région de mise sous pression (6381),
et que le rayon de cintrage (C3) de la principale région matricée externe (6384-1) est égal au rayon de cintrage (C4) de la région matricée externe de raccordement (6384-2).

17. L'appareil de formation d'un boîtier pour piles que décrit la revendication 16,
si ce n'est que le rayon de cintrage (C3) de la principale région matricée externe (6384-1) et le rayon de cintrage (C4) de la région matricée externe de raccordement (6384-2) sont égaux à au moins 1 mm environ, et
que le rayon de cintrage (C1) de la première région de mise sous pression (6381) se situe, approximativement, entre 1,5 et 2,5 mm.

18. Une pile secondaire du type à pochette (1) composée des éléments suivants :
un ensemble électrode (10) formé en empilant une électrode et un séparateur, et
un boîtier pour pile (13) comportant une portion à coupelle (133, 533) configurée pour recevoir l'ensemble électrode (10)
et ce boîtier pour pile (13) comporte des rebords matricés (138,5380) configurés pour raccorder une paroi latérale (1331, 5333) de la portion à coupelle (133, 533) à une portion latérale (134, 534) se prolongeant depuis la paroi latérale (1331, 5333),
et les rebords matricés (138, 5380) comportent :
- une première région (1381, 5381) qui est arrondie par un premier rayon de cintrage (r1) , et une languette d'électrode (11) part de l'ensemble électrode (10) et vient se positionner dans la première région (1381, 5381), et
- une deuxième région (1382, 5382) qui est adjacente à la première région (1381, 5381) et est arrondie par plusieurs deuxièmes rayons de cintrage (r2, r3, r4), et ces deuxièmes rayons de cintrage (r2, r3, r4) sont tous plus petits que le premier rayon de cintrage (r1),
et cette deuxième région (1382, 5382) est divisée en une région interne (5383) et une région externe (5384) par la première région (1381, 5381), et
le rayon de cintrage (r2) de la région interne (5383) est différent des rayons de cintrage (r3, r4) de la région externe (5384).
